(19) Europäisches Patentamt
European Patent Office
Office européen des brevets

(11) **EP 4 203 099 A1**

(12) **EUROPEAN PATENT APPLICATION**
published in accordance with Art. 153(4) EPC

(43) Date of publication:
**28.06.2023 Bulletin 2023/26**

(21) Application number: **21858345.8**

(22) Date of filing: **18.08.2021**

(51) International Patent Classification (IPC):
**H01M 4/36** (2006.01)    **H01M 4/13** (2010.01)
**H01M 4/587** (2010.01)

(52) Cooperative Patent Classification (CPC):
**H01M 4/13; H01M 4/36; H01M 4/587;** Y02E 60/10

(86) International application number:
**PCT/JP2021/030234**

(87) International publication number:
**WO 2022/039201 (24.02.2022 Gazette 2022/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 18.08.2020   JP 2020138090
18.08.2020   JP 2020138091
18.05.2021   JP 2021083855

(71) Applicant: **APB Corporation
Echizen-shi, Fukui 915-0043 (JP)**

(72) Inventors:
• **HORIE, Hideaki
Tokyo 101-0041 (JP)**
• **YAMAGUCHI, Toshiaki
Kyoto-shi, Kyoto 605-0995 (JP)**
• **NISHIMURA, Hideki
Kyoto-shi, Kyoto 605-0995 (JP)**
• **KAWAKITA, Kenichi
Kyoto-shi, Kyoto 605-0995 (JP)**
• **MINAMI, Kazuya
Kyoto-shi, Kyoto 605-0995 (JP)**

(74) Representative: **Hoefer & Partner Patentanwälte
mbB
Pilgersheimer Straße 20
81543 München (DE)**

(54) **COATED NEGATIVE ELECTRODE ACTIVE MATERIAL PARTICLES FOR LITHIUM ION BATTERIES, NEGATIVE ELECTRODE FOR LITHIUM ION BATTERIES, LITHIUM ION BATTERY, AND METHOD FOR PRODUCING COATED NEGATIVE ELECTRODE ACTIVE MATERIAL PARTICLES FOR LITHIUM ION BATTERIES**

(57)    Coated negative electrode active material particles for lithium ion batteries in which at least a part of the surface of negative electrode active material particles is covered with a coating layer containing a polymer compound and a compound (A), the polymer compound is a polymer including (meth)acrylic acid as a constituent monomer, the weight proportion of (meth)acrylic acid in the polymer based on the weight of the polymer is 70 to 95 wt%, and the compound (A) is at least one selected from the group consisting of tetrahydrothiophene 1,1-dioxide, ethylene carbonate and vinylene carbonate.

EP 4 203 099 A1

**Description**

[Technical Field]

The present invention relates to coated negative electrode active material particles for lithium ion batteries, a negative electrode for lithium ion batteries, a lithium ion battery, and a method for producing coated negative electrode active material particles for lithium ion batteries.

[Background Art]

Lithium ion batteries have recently come to be widely used in various applications as secondary batteries that can achieve a high energy density and a high output density.

As a method for producing a lithium ion battery, generally, a method of applying a slurry obtained by mixing an electrode active material with a binder and a solvent onto a substrate, removing the solvent, and then performing compression may be exemplified.

However, in such a method, since it is necessary to reliably dry the hardly volatile solvent to a level that does not affect the battery performance, it is necessary to design a large drying furnace. Therefore, there is a problem that removal of the solvent requires much time and energy.

In addition, since the solvent is generally a non-aqueous electrolytic solution, it is difficult to reduce the production cost, for example, a solvent collection mechanism being required in order to prevent air pollution.

On the other hand, for example, a method for producing an electrode for lithium ion batteries using coated active material particles in which at least a part of the surface of active material particles is covered with a coating agent containing a coating resin and a conductive assistant without a solvent removal process is known (refer to PTL 1).

In such a method, the drying facility can be designed to be compact, and not only can the energy required for conventional solvent removal be reduced, but also the area for lithium ion battery production can be reduced.

In addition, since the amount of the solvent used when lithium ion batteries are produced can be reduced, it is possible to reduce the solvent collect cost and it is possible to reduce the load on the surrounding environment.

[Citation List]

[Patent Literature]

[PTL 1] Japanese Patent Application Publication No. 2016-189325

[Summary of Invention]

[Technical Problem]

However, the electrode for lithium ion batteries produced using the coated active material particles may have insufficient mechanical strength, and this may lead to damage to the electrode for lithium ion batteries in a lithium ion battery producing process and deteriorate cycle characteristics of lithium ion batteries, and there is room for improvement.

Here, an object of the present invention is to provide coated negative electrode active material particles which allow a negative electrode for lithium ion batteries having excellent mechanical strength to be produced, and allow a lithium ion battery having excellent cycle characteristics to be produced even if a lithium ion battery is produced without a solvent removal process.

[Solution to Problem]

The inventors conducted extensive studies in order to address the above problem, and as a result, found that, when the coating layer constituting coated negative electrode active material particles contains a specific polymer compound and the compound (A), the compound (A) functions as a plasticizer for the polymer compound, imparts excellent elasticity to the coating layer, and can improve the adhesion between the coated negative electrode active material particles, and thus when the coated negative electrode active material particles are used, it is possible to form a negative electrode for lithium ion batteries having excellent mechanical strength. In addition, the inventors found that, in a lithium ion battery formed using the negative electrode for lithium ion batteries, in the negative electrode for lithium ion batteries, the adhesion between the coated negative electrode active material particles is improved, and even when the lithium ion battery is charged or discharged, the structure of the negative electrode for lithium ion batteries can be maintained, and thus cycle characteristics are improved, and completed the present invention.

That is, the present invention provides coated negative electrode active material particles for lithium ion batteries in which at least a part of the surface of negative electrode active material particles is covered with a coating layer containing a polymer compound and a compound (A), the polymer compound is a polymer including (meth)acrylic acid as a constituent monomer, the weight proportion of (meth)acrylic acid in the polymer based on the weight of the polymer is 70 to 95 wt%, and the compound (A) is at least one selected from the group consisting of tetrahydrothiophene 1,1-dioxide, ethylene carbonate and vinylene carbonate; a negative electrode for lithium ion batteries including the coated negative electrode active material particles; a lithium ion battery including the negative electrode for lithium ion batteries; and a method for producing coated negative electrode active material particles for lithium ion batteries including a mixing process in which a solution in which a polymer compound and a compound (A) are dissolved in an organic solvent and negative electrode active material particles are mixed and a distillation process in which the organic solvent is distilled off after the mixing process, wherein the polymer compound is a polymer including (meth)acrylic acid as a constituent monomer, the weight proportion of (meth)acrylic acid in the polymer based on the weight of the polymer is 70 to 95 wt%, and the compound (A) is at least one selected from the group consisting of tetrahydrothiophene 1,1-dioxide, ethylene carbonate and vinylene carbonate.

[Advantageous Effects of Invention]

According to the present invention, it is possible to provide coated negative electrode active material particles which allow a negative electrode for lithium ion batteries having excellent mechanical strength to be produced, and allow a lithium ion battery having excellent cycle characteristics to be produced even if a lithium ion battery is produced without a solvent removal process.

[Brief Description of Drawings]

[Fig. 1]

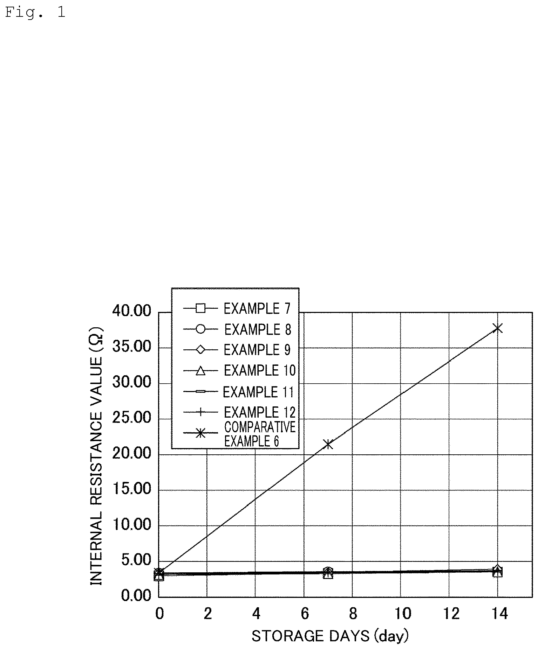

Fig. 1 is a graph showing the relationship between storage days and the internal resistance value of lithium ion batteries obtained in Examples 7 to 12 and Comparative Example 6.

[Description of Embodiments]

<Coated Negative Electrode Active Material Particles for Lithium Ion Batteries>

In coated negative electrode active material particles for lithium ion batteries of the present invention, at least a part of the surface of negative electrode active material particles is covered with a coating layer containing a polymer compound and a compound (A), the polymer compound is a polymer including (meth)acrylic acid as a constituent monomer, the weight proportion of (meth)acrylic acid in the polymer based on the weight of the polymer is 70 to 95 wt%, and the compound (A) is at least one selected from the group consisting of tetrahydrothiophene 1,1-dioxide, ethylene carbonate and vinylene carbonate.

(Negative Electrode Active Material Particles)

Examples of negative electrode active material particles include carbonaceous materials [graphite, non-graphitizable carbon, amorphous carbon, burned resin components (for example, those obtained by burning and carbonizing a phenolic resin, a furan resin or the like, etc.), cokes (for example, pitch coke, needle coke, petroleum coke, etc.), carbon fibers and the like], silicon material [silicon, silicon oxide (SiOx), silicon-carbon composites (those obtained by covering the surface of carbon particles with silicon and/or silicon carbide, those obtained by covering the surface of silicon particles or silicon oxide particles with carbon and/or silicon carbide, and silicon carbide, etc.), silicon alloys (silicon-aluminum alloys, silicon-lithium alloys, silicon-nickel alloys, silicon-iron alloys, silicon-titanium alloys, silicon-manganese alloys, silicon-copper alloys, silicon-tin alloys, etc.) or the like], conductive polymers (for example, polyacetylene, polypyrrole, etc.), metals (tin, aluminum, zirconium, titanium, etc.), metal oxides (titanium oxides, lithium/titanium oxides, etc.) and metal alloys (for example, lithium-tin alloys, lithium-aluminum alloys, lithium-aluminum-manganese alloys, etc.) and mixtures of these components and carbonaceous materials.
These negative electrode active material particles may be used alone or two or more thereof may be used in combination.
In consideration of electrical characteristics of the battery, the volume average particle size of the negative electrode active material particles is preferably 0.01 to 100 $\mu$m, more preferably 0.1 to 20 $\mu$m, and still more preferably 2 to 10 $\mu$m.

(Coating Layer)

The coating layer contains a polymer compound and a compound (A), the polymer compound is a polymer including (meth)acrylic acid as a constituent monomer, and the weight proportion of (meth)acrylic acid in the polymer based on the weight of the polymer is 70 to 95 wt%, and the compound (A) is at least one selected from the group consisting of tetrahydrothiophene 1,1-dioxide, ethylene carbonate and vinylene carbonate.

When the coating layer constituting coated negative electrode active material particles contains a specific polymer compound and the compound (A), the compound (A) functions as a plasticizer for the polymer compound, imparts excellent elasticity to the coating layer, and can improve the adhesion between the coated negative electrode active material particles. Thus, when such coated negative electrode active material particles are used, it is possible to form a negative electrode for lithium ion batteries having excellent mechanical strength.

The polymer compound is a polymer including (meth)acrylic acid as a constituent monomer, and the weight proportion of (meth)acrylic acid in the polymer based on the weight of the polymer is 70 to 95 wt%.

In order to control the degree of swelling of the polymer compound with respect to the compound (A) and the electrolytic solution, the weight proportion of (meth)acrylic acid based on the weight of the polymer is preferably 80 to 92 wt%.

In order to improve the adhesion between the coated active material particles, the polymer compound is a polymer containing a vinyl monomer (b) as a constituent monomer, and preferably contains a vinyl monomer (b1) represented by the following General Formula (1) as the vinyl monomer (b).

$$CH_2=C(R^1)COOR^2 \qquad (1)$$

[in General Formula (1), $R^1$ is a hydrogen atom or a methyl group and $R^2$ is an alkyl group having 1 to 12 carbon atoms]

The alkyl group having 1 to 12 carbon atoms for $R^2$ may be a linear alkyl group or a branched alkyl group.

Examples of linear alkyl groups among alkyl groups having 1 to 12 carbon atoms include a methyl group, ethyl group, propyl group, butyl group, pentyl group, hexyl group, heptyl group, octyl group, nonyl group, decyl group, undecyl group, and dodecyl group.

Examples of branched alkyl groups among alkyl groups having 1 to 12 carbon atoms include a 1-methylpropyl group (sec-butyl group), 2-methylpropyl group, 1,1-dimethylethyl group (tert-butyl group), 1-methylbutyl group, 1,1-dimethylpropyl group, 1,2-dimethylpropyl group, 2,2-dimethylpropyl group (neopentyl group), 1-methylpentyl group, 2-methylpentyl group, 3-methylpentyl group, 4-methylpentyl group, 1,1-dimethylbutyl group, 1,2-dimethylbutyl group, 1,3-dimethylbutyl group, 2,2-dimethylbutyl group, 2,3-dimethylbutyl group, 1-ethylbutyl group, 2-ethylbutyl group, 1-methylhexyl group, 2-methylhexyl group, 2-methylhexyl group, 4-methylhexyl group, 5-methylhexyl group, 1-ethylpentyl group, 2-ethylpentyl group, 3-ethylpentyl group, 1,1-dimethylpentyl group, 1,2-dimethylpentyl group, 1,3-dimethylpentyl group, 2,2-dimethylpentyl group, 2,3-dimethylpentyl group, 2-ethylpentyl group, 1-methylheptyl group, 2-methylheptyl group, 3-methylheptyl group, 4-methylheptyl group, 5-methylheptyl group, 6-methylheptyl group, 1,1-dimethylhexyl group, 1,2-dimethylhexyl group, 1,3-dimethylhexyl group, 1,4-dimethylhexyl group, 1,5-dimethylhexyl group, 1-ethylhexyl group, 2-ethylhexyl group, 1-methyloctyl group, 2-methyloctyl group, 3-methyloctyl group, 4-methyloctyl group, 5-methyloctyl group, 6-methyloctyl group, 7-methyloctyl group, 1,1-dimethylheptyl group, 1,2-dimethylheptyl group, 1,3-dimethylheptyl group, 1,4-dimethylheptyl group, 1,5-dimethylheptyl group, 1,6-dimethylheptyl group, 1-ethylheptyl group, 2-ethylheptyl group, 1-methylnonyl group, 2-methylnonyl group, 3-methylnonyl group, 4-methylnonyl group, 5-methylnonyl group, 6-methylnonyl group, 7-methylnonyl group, 8-methylnonyl group, 1,1-dimethyloctyl group, 1,2-dimethyloctyl group, 1,3-dimethyloctyl group, 1,4-dimethyloctyl group, 1,5-dimethyloctyl group, 1,6-dimethyloctyl group, 1,7-dimethyloctyl group, 1-ethyloctyl group, 2-ethyloctyl group, 1-methyldecyl group, 2-methyldecyl group, 3-methyldecyl group, 4-methyldecyl group, 5-methyldecyl group, 6-methyldecyl group, 7-methyldecyl group, 8-methyldecyl group, 9-methyldecyl group, 1,1-dimethylnonyl group, 1,2-dimethylnonyl group, 1,3-dimethylnonyl group, 1,4-dimethylnonyl group, 1,5-dimethylnonyl group, 1,6-dimethylnonyl group, 1,7-dimethylnonyl group, 1,8-dimethylnonyl group, 1-ethylnonyl group, 2-ethylnonyl group, 1-methylundecyl group, 2-methylundecyl group, 3-methylundecyl group, 4-methylundecyl group, 5-methylundecyl group, 6-methylundecyl group, 7-methylundecyl group, 8-methylundecyl group, 9-methylundecyl group, 10-methylundecyl group, 1,1-dimethyldecyl group, 1,2-dimethyldecyl group, 1,3-dimethyldecyl group, 1,4-dimethyldecyl group, 1,5-dimethyldecyl group, 1,6-dimethyldecyl group, 1,7-dimethyldecyl group, 1,8-dimethyldecyl group, 1,9-dimethyldecyl group, 1-ethyldecyl group, and 2-ethyldecyl group.

In order to improve flexibility when the polymer compound swells with respect to the compound (A), the vinyl monomer (b1) is preferably methyl methacrylate, butyl methacrylate, 2-ethylhexyl methacrylate, (iso)butyl acrylate, or 2-ethylhexyl acrylate.

In the polymer compound, the weight proportion of the vinyl monomer (b) based on the weight of the polymer is preferably 5 to 30 wt% and more preferably 10 to 15 wt%.

The polymer compound may contain other monomers as long as the effects of the present invention are not impaired.

As the other monomers, for example, monomers used in active material coating resins in Japanese Patent Application Publication No. 2017-054703, WO 2015/005117, and the like can be appropriately selected and used.

The polymer compound can be produced using, for example, a known polymerization initiator {azo initiator [2,2'-azobis(2-methylpropionitrile), 2,2'-azobis(2,4-dimethylvaleronitrile), 2,2'-azobis(2-methylbutyronitrile), 2,2'-azobis(2-methylpropionamidine) dihydrochloride, etc.], peroxide initiator (benzoyl peroxide, di-t-butyl peroxide, lauryl peroxide, etc.) or the like} by a known polymerization method (bulk polymerization, solution polymerization, emulsion polymerization, suspension polymerization, etc.).

In order to adjust the weight-average molecular weight to be within a preferable range, the amount of the polymerization initiator used based on the total weight of the monomers is preferably 0.01 to 5 wt%, more preferably 0.05 to 2 wt%, and still more preferably 0.1 to 1.5 wt%, and the polymerization temperature and the polymerization time are adjusted depending on the type of the polymerization initiator and the like, and polymerization is performed at a polymerization temperature of preferably -5 to 150°C, (more preferably 30 to 120°C) for a reaction time of preferably 0.1 to 50 hours (more preferably 2 to 24 hours).

Examples of solvents used in the solution polymerization include esters (with 2 to 8 carbon atoms, for example, ethyl acetate and butyl acetate), alcohols (with 1 to 8 carbon atoms, for example, methanol, ethanol and octanol), hydrocarbons (with 4 to 8 carbon atoms, for example, n-butane, cyclohexane and toluene), amides (for example, N,N-dimethylformamide (hereafter abbreviated as DMF)) and ketones (with 3 to 9 carbon atoms, for example, methyl ethyl ketone), and in order to adjust the weight-average molecular weight to be within a preferable range, the amount thereof used based on the total weight of the monomers is preferably 5 to 900 wt%, more preferably 10 to 400 wt%, and still more preferably 30 to 300 wt%, and the monomer concentration is preferably 10 to 95 wt%, more preferably 20 to 90 wt%, and still more preferably 30 to 80 wt%.

Examples of dispersion media for emulsion polymerization and suspension polymerization include water, alcohols (for example, ethanol), esters (for example, ethyl propionate), and light naphtha, and examples of emulsifiers include (C10-C24) higher fatty acid metal salts (for example, sodium oleate and sodium stearate), (C10-C24) higher alcohol sulfate metal salts (for example, sodium lauryl sulfate), ethoxylated tetramethyldecynediol, sodium sulfoethyl methacrylate, and dimethylaminomethyl methacrylate. In addition, polyvinyl alcohol, polyvinylpyrrolidone or the like may be added as the stabilizer.

The monomer concentration of the solution or dispersion liquid is preferably 5 to 95 wt%, more preferably 10 to 90 wt%, and still more preferably 15 to 85 wt%, and the amount of the polymerization initiator used based on the total weight of the monomers is preferably 0.01 to 5 wt%, and more preferably 0.05 to 2 wt%.

During polymerization, a known chain transfer agent, for example, a mercapto compound (dodecyl mercaptan, n-butyl mercaptan, etc.) and/or a halogenated hydrocarbon (carbon tetrachloride, carbon tetrabromide, benzyl chloride, etc.), can be used.

The polymer compound may be a crosslinked polymer obtained by cross-linking the polymer compound with a cross-linking agent (A') having a reactive functional group that reacts with a carboxyl group {preferably a polyepoxy compound (a'1) [polyglycidyl ether (bisphenol A diglycidyl ether, propylene glycol diglycidyl ether, glycerin triglycidyl ether, etc.) and polyglycidylamine (N,N-diglycidylaniline and 1,3-bis(N,N-diglycidylaminomethyl)), and the like] and/or a polyol compound (a'2) (ethylene glycol, etc.)}.

As a method of cross-linking the polymer compound using the cross-linking agent (A'), a method in which negative electrode active material particles are covered with a polymer compound and then cross-linked may be exemplified. Specifically, a method in which negative electrode active material particles and a resin solution containing a polymer compound are mixed, the solvent is removed to produce coated active material particles, and a solution containing a cross-linking agent (A') is then mixed with the coated active material particles and heated, and thus the solvent is removed, a cross-linking reaction is caused, and a reaction in which the polymer compound is cross-linked with the cross-linking agent (A') is caused on the surface of negative electrode active material particles may be exemplified.

The heating temperature is adjusted depending on the type of the cross-linking agent, and when the polyepoxy compound (a'1) is used as the cross-linking agent, the heating temperature is preferably 70°C or higher, and when the polyol compound (a'2) is used, the heating temperature is preferably 120°C or higher.

The degree of swelling of the polymer compound with respect to the compound (A) is more preferably 150 to 400 wt% and still more preferably 180 to 220 wt%.

In addition, in order to maintain the conductivity in the negative electrode active material layer in the lithium ion battery, the degree of swelling of the polymer compound with respect to an electrolytic solution to be described below is more preferably 1 to 30 wt% and still more preferably 5 to 10 wt%.

When the polymer compound has such properties, it is possible to impart excellent elasticity to the coating layer.

Here, the degree of swelling with respect to the compound (A) in this paragraph is the degree of swelling with respect to the compound (A) used when coated negative electrode active material particles for lithium ion batteries to be described below are produced. In addition, the degree of swelling with respect to the electrolytic solution in this paragraph is the degree of swelling with respect to the electrolytic solution used when a negative electrode for lithium ion batteries to be described below is produced.

The degree of swelling of the polymer compound with respect to ethylene carbonate is more preferably 150 to 250 wt% and still more preferably 180 to 220 wt%.

In addition, the degree of swelling of the polymer compound with respect to an electrolytic solution prepared by dissolving 10 parts by weight of LiFSI[LiN(FSO$_2$)$_2$] in a solvent mixture of 3.5 parts by weight of ethylene carbonate (EC) and 5 parts by weight of propylene carbonate (PC) is more preferably 1 to 20 wt% and still more preferably 5 to 10 wt%.

The degree of swelling can be measured by, for example, the following method.

The polymer compound is coarsely pulverized with a hammer and additionally pulverized with a coffee mill to form a powder. In addition, additional pulverization is performed using an agate mortar, and the polymer compound is formed into a fine powder. Next, using a heat press machine with a heating block heated to a temperature (for example, 110°C) at which a polymer compound can be molded, a 10×40×0.2 mm metal frame coated with a mold release agent is placed on a 0.1 mm Teflon (registered trademark) sheet, and the metal frame whose inside is covered with the powdered polymer compound and covered with a Teflon (registered trademark) sheet is pressed at a pressure of 1 MPa for 60 seconds. After pressing, the inside of the metal frame is additionally covered with a powder polymer compound, and similarly, an operation of pressing at a pressure of 1 MPa for 60 seconds is repeated until there are no opaque parts or bubbles in the metal frame, and a test piece is obtained by removing it from the metal frame. The test piece is immersed in a solvent (the compound (A) or the electrolytic solution) at 50°C for 3 days and brought into a saturated liquid absorption state.

Then, the degree of swelling can be obtained from the weight change in the test piece between before and after liquid absorption according to the following formula. degree of swelling [wt%]=[(test piece weight after liquid absorption-test piece weight before liquid absorption)/test piece weight before liquid absorption]×100

A preferable lower limit of the weight-average molecular weight of the polymer compound is 3,000, a more preferable lower limit is 5,000, and a still more preferable lower limit is 7,000. On the other hand, a preferable upper limit of the weight-average molecular weight of the polymer compound is 100,000, and a more preferable upper limit is 70,000.

The weight-average molecular weight of the polymer compound can be obtained by gel permeation chromatography (hereinafter abbreviated as GPC) measurement under the following conditions.

Device: Alliance GPC V2000 (commercially available from Waters)
Solvent: ortho-dichlorobenzene, DMF, THF
Standard substance: polystyrene
Sample concentration: 3 mg/ml
Column stationary phase: PLgel 10 um, MIXED-B 2 columns in series (commercially available from Polymer Laboratories Ltd.) Column temperature: 135°C

In the coated negative electrode active material particles for lithium ion batteries of the present invention, in consideration of the electrical resistance and the energy density, the weight proportion of the polymer compound based on the weight of the coated negative electrode active material particles for lithium ion batteries is preferably 1 to 7 wt% and more preferably 2 to 6 wt%.

The compound (A) is at least one selected from the group consisting of tetrahydrothiophene 1,1-dioxide, ethylene carbonate and vinylene carbonate.

When the coating layer contains the compound (A), the coating layer swells due to the compound (A), imparts excellent elasticity to the coating layer, and can improve the adhesion between the coated negative electrode active material particles. In addition, it is thought that, even when coated negative electrode active material particles are immersed in an electrolytic solution, the coating layer partially retains the compound (A) and maintains the adhesion between the coated negative electrode active material particles, and thus a negative electrode for lithium ion batteries having excellent mechanical strength can be obtained.

In order to suitably improve cycle characteristics of lithium ion batteries, the compound (A) is preferably a combination of ethylene carbonate and vinylene carbonate or a combination of tetrahydrothiophene 1,1-dioxide and vinylene carbonate.

When the compound (A) contains vinylene carbonate, the content of the vinylene carbonate based on the weight of the compound (A) is preferably 10 wt% or less in order to suitably form an SEI film and improve cycle characteristics.

In the coated negative electrode active material particles for lithium ion batteries of the present invention, in order to impart elasticity to the coating layer, the weight proportion of the compound (A) based on the weight of the coated negative electrode active material particles for lithium ion batteries is preferably 0.5 to 14 wt% and more preferably 1 to 2 wt%.

In consideration of the internal resistance and the like, the coating layer preferably contains a conductive assistant.

The conductive assistant is preferably selected from among materials having conductivity.

Examples of preferable conductive assistants include metals [aluminum, stainless steel (SUS), silver, gold, copper, titanium, etc.], carbon [graphite, carbon black (acetylene black, ketjen black, furnace black, channel black, thermal lamp black, carbon nanofiber, etc.), etc.], and mixtures thereof.

These conductive assistants may be used alone or two or more thereof may be used in combination. In addition, alloys or metal oxides thereof may be used.

Among these, in consideration of electrical stability, aluminum, stainless steel, carbon, silver, gold, copper, titanium and mixtures thereof are more preferable, silver, gold, aluminum, stainless steel and carbon are still more preferable, and carbon is particularly preferable.

In addition, these conductive assistants may be those obtained by coating a conductive material [preferably, a metal assistant among the above conductive assistants] around a particulate ceramic material or a resin material by plating or the like.

The shape (form) of the conductive assistant is not limited to a particle form, and may be a form other than the particle form, and may be a form that is put into practical use as a so-called fiber-based conductive assistant such as carbon nanofibers and carbon nanotubes.

The average particle size of the conductive assistant is not particularly limited, and in consideration of electrical characteristics of the battery, it is preferably about 0.01 to 10 um.

In this specification, the "particle size of the conductive assistant" is the maximum distance L among the distances between arbitrary two points on the outline of the conductive assistant. As the value of "average particle size", the value calculated as an average value of the particle sizes of the particles observed in several to several tens of fields of view using an observation device such as a scanning electron microscope (SEM) or a transmission electron microscope (TEM) is used.

The ratio between the polymer compound and the conductive assistant is not particularly limited, and in consideration of the internal resistance of the battery and the like, the weight ratio between the polymer compound (resin solid content weight):the conductive assistant is preferably 1:0.01 to 1:50 and more preferably 1:0.2 to 1:3.0.

The coating layer preferably contains a polymer compound, a conductive assistant and ceramic particles.

When the coating layer contains a polymer compound, a conductive assistant and ceramic particles, it is possible to inhibit a side reaction that occurs between the electrolytic solution and the coated negative electrode active material particles, and it is possible to prevent the internal resistance value of the lithium ion battery from increasing.

Examples of ceramic particles include metal carbide particles, metal oxide particles, and glass ceramic particles.

Examples of metal carbide particles include silicon carbide (SiC), tungsten carbide (WC), molybdenum carbide ($MO_2C$), titanium carbide (TiC), tantalum carbide (TaC), niobium carbide (NbC), vanadium carbide (VC), and zirconium carbide (ZrC) .

Examples of metal oxide particles include particles of zinc oxide (ZnO), aluminum oxide ($Al_2O_3$), silicon dioxide ($SiO_2$), tin oxide ($SnO_2$), titania ($TiO_2$), zirconia ($ZrO_2$), indium oxide ($In_2O_3$), $Li_2B_4O_7$, $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_3PO_4$, $Li_2MoO_4$, $Li_3BO_3$, $LiBO_2$, $Li_2CO_3$, $Li_2SiO_3$ and a perovskite oxide represented by $ABO_3$ (where, A is at least one selected from the group consisting of Ca, Sr, Ba, La, Pr and Y, and B is at least one selected from the group consisting of Ni, Ti, V, Cr, Mn, Fe, Co, Mo, Ru, Rh, Pd and Re).

As the metal oxide particles, in order to suitably inhibit a side reaction that occurs between the electrolytic solution and the coated negative electrode active material particles, zinc oxide (ZnO), aluminum oxide ($Al_2O_3$), silicon dioxide ($SiO_2$) and lithium tetraborate ($Li_2B_4O_7$) are preferable.

As the ceramic particles, in order to suitably inhibit a side reaction that occurs between the electrolytic solution and the coated negative electrode active material particles, glass ceramic particles are preferable.

These may be used alone or two or more thereof may be used in combination.

The glass ceramic particles are preferably a lithium-containing phosphate compound having a rhombohedral crystal system and a chemical formula thereof is represented by $Li_xM''_2P_3O_{12}$ (X=1 to 1.7).

Here, M" is one or more elements selected from the group consisting of Zr, Ti, Fe, Mn, Co, Cr, Ca, Mg, Sr, Y, Sc, Sn, La, Ge, Nb, and Al. In addition, some P may be replaced with Si or B, and some O may be replaced with F, Cl or the like. For example, $Li_{1.15}Ti_{1.85}Al_{0.15}Si_{0.05}P_{2.95}O_{12}$, $Li_{1.2}Ti_{1.8}Al_{0.1}Ge_{0.1}Si_{0.05}P_{2.95}O_{12}$ or the like can be used.

In addition, materials with different compositions may be mixed or combined, and the surface may be coated with a glass electrolyte or the like. Alternatively, it is preferable to use glass ceramic particles that precipitate a crystal phase of a lithium-containing phosphate compound having a NASICON type structure according to a heat treatment.

Examples of glass electrolytes include the glass electrolyte described in Japanese Patent Application Publication No. 2019-96478.

Here, the mixing proportion of $Li_2O$ in the glass ceramic particles is preferably 8 mass% or less in terms of oxide.

In addition to a NASICON type structure, a solid electrolyte which is composed of Li, La, Mg, Ca, Fe, Co, Cr, Mn, Ti, Zr, Sn, Y, Sc, P, Si, O, In, Nb, or F, has a LISICON type, perovskite type, $\beta$-$Fe_2(SO_4)_3$ type, or $Li_3In_2(PO_4)_3$ type

crystal structure, and transmits $1\times10^{-5}$ S/cm or more of Li ions at room temperature may be used.

The above ceramic particles may be used alone or two or more thereof may be used in combination.

In consideration of the energy density and electrical resistance value, the volume average particle size of the ceramic particles is preferably 1 to 1,200 nm, more preferably 1 to 500 nm, and still more preferably 1 to 150 nm.

The weight proportion of the ceramic particles based on the weight of the coated negative electrode active material particles is preferably 0.5 to 5.0 wt%.

When ceramic particles are contained in the above range, it is possible to suitably inhibit a side reaction that occurs between the electrolytic solution and the coated negative electrode active material particles.

The weight proportion of the ceramic particles based on the weight of the coated negative electrode active material particles is more preferably 2.0 to 4.0 wt%.

(Coated Negative Electrode Active Material Particles)

In the coated negative electrode active material particles for lithium ion batteries of the present invention, at least a part of the surface of negative electrode active material particles is covered with a coating layer containing a polymer compound and a compound (A).

In consideration of cycle characteristics, the coverage (obtained by the following calculation formula) of the negative electrode active material particles is preferably 30 to 95%.

coverage (%)={1-[BET specific surface area of coated negative

electrode active material particles/(BET specific surface area

of negative electrode active material particles × weight

proportion of negative electrode active material particles

contained in coated negative electrode active material particles + BET specific surface area of conductive assistant

× weight proportion of conductive assistant contained in

coated negative electrode active material particles)]}×100

<Method for Producing Coated Negative Electrode Active Material Particles for Lithium Ion Batteries>

A method for producing coated negative electrode active material particles for lithium ion batteries of the present invention includes a mixing process in which a solution in which a polymer compound and a compound (A) are dissolved in an organic solvent and negative electrode active material particles are mixed and a distillation process in which the organic solvent is distilled off after the mixing process, and the polymer compound is a polymer including (meth)acrylic acid as a constituent monomer, the weight proportion of (meth)acrylic acid in the polymer based on the weight of the polymer is 70 to 95 wt%, and the compound (A) is at least one selected from the group consisting of tetrahydrothiophene 1,1-dioxide, ethylene carbonate and vinylene carbonate.

(Mixing Process)

The method for producing coated negative electrode active material particles for lithium ion batteries of the present invention includes a mixing process in which a solution in which a polymer compound and a compound (A) are dissolved in an organic solvent and negative electrode active material particles are mixed.

In the method for producing coated negative electrode active material particles for lithium ion batteries of the present invention, materials described in the above coated negative electrode active material particles for lithium ion batteries of the present invention can be appropriately selected and used.

In addition, the organic solvent is not particularly limited as long as it can dissolve the polymer compound and the compound (A), and for example, any solvent exemplified as the solvent used in the above solution polymerization can be used.

A method for mixing a solution in which a polymer compound and a compound (A) are dissolved in an organic solvent and negative electrode active material particles is not particularly limited, and a known method can be used.

For example, a method in which, when negative electrode active material particles are put into a universal mixer and stirred at 30 to 500 rpm, a solution in which a polymer compound and a compound (A) are dissolved in an organic solvent is added dropwise and mixed over 1 to 90 minutes, and as necessary, a conductive assistant is mixed may be exemplified.

The mixing proportions of respective components in the mixing process is not particularly limited, and for example, it is preferable to mix 79.5 to 99.5 wt% of negative electrode active material particles, 1 to 7 wt% of the polymer compound, and 0.5 to 14 wt% of the compound (A) in terms of the weight ratio of the solid content.

In addition, the conductive assistant is obtained by preferably mixing the polymer compound (resin solid content weight):conductive assistant at 1:0.01 to 1:50 in terms of the weight ratio.

In addition, in the mixing process, it is also preferable to mix a conductive assistant and ceramic particles.

(Distillation Process)

The method for producing coated negative electrode active material particles for lithium ion batteries of the present invention includes a distillation process in which the organic solvent is distilled off after the mixing process.

The distillation process is not particularly limited, and known methods can be used.

For example, a method in which, while stirring the mixed composition obtained in the mixing process, the temperature is raised to 50 to 200°C, the pressure is reduced to 0.007 to 0.04 MPa, and the sample is then left for 10 to 150 minutes, and the organic solvent is distilled off can be used.

Here, the distillation process can be operated in a compact facility because the amount of the organic solvent to be distilled off is small compared to the conventional solvent removal process for producing lithium ion batteries.

<Negative Electrode for Lithium Ion Batteries>

The negative electrode for lithium ion batteries of the present invention includes the above coated negative electrode active material particles of the present invention.

The negative electrode for lithium ion batteries of the present invention preferably has a negative electrode active material layer containing the coated negative electrode active material particles and an electrolytic solution containing an electrolyte and a solvent, and a negative electrode current collector.

(Negative Electrode Active Material Layer)

In the negative electrode active material layer, the weight proportion of the coated negative electrode active material particles for lithium ion batteries of the present invention based on the weight of the negative electrode active material layer is preferably 40 to 95 wt% and more preferably 60 to 90 wt%.

As the electrolyte, electrolytes used in known electrolytic solutions can be used, and for example, lithium salts of inorganic anions such as $LiPF_6$, $LiBF_4$, $LiSbF_6$, $LiAsF_6$, $LiClO_4$ and $LiN(FSO_2)_2$, and lithium salts of organic anions such as $LiN(CF_3SO_2)_2$, $LiN(C_2F_5SO_2)_2$ and $LiC(CF_3SO_2)_3$ may be exemplified. Among these, $LiN(FSO_2)_2$ is preferable in consideration of the battery output and charging and discharging cycle characteristics.

As the solvent, non-aqueous solvents used in known electrolytic solutions can be used, and for example, lactone compounds, cyclic or chain carbonates, chain carboxylates, cyclic or chain ethers, phosphate esters, nitrile compounds, amide compounds, sulfone, sulfolane and mixtures thereof can be used.

Examples of lactone compounds include 5-membered ring ($\gamma$-butyrolactone, $\gamma$-valerolactone, etc.) and 6-membered ring ($\delta$-valerolactone, etc.) lactone compounds.

Examples of cyclic carbonates include propylene carbonate, ethylene carbonate (EC) and butylene carbonate (BC).

Examples of chain carbonates include dimethyl carbonate (DMC), methyl ethyl carbonate (MEC), diethyl carbonate (DEC), methyl-n-propyl carbonate, ethyl-n-propyl carbonate and di-n-propyl carbonate.

Examples of chain carboxylates include methyl acetate, ethyl acetate, propyl acetate and methyl propionate.

Examples of cyclic ethers include tetrahydrofuran, tetrahydropyran, 1,3-dioxolane and 1,4-dioxane. Examples of chain ethers include dimethoxymethane and 1,2-dimethoxyethane.

Examples of phosphate esters include trimethyl phosphate, triethyl phosphate, ethyldimethyl phosphate, diethylmethyl phosphate, tripropyl phosphate, tributyl phosphate, tri(trifluoromethyl) phosphate, tri(trichloromethyl) phosphate, tri(trifluoroethyl) phosphate, tri(triperfluoroethyl) phosphate, 2-ethoxy-1,3,2-dioxaphospholan-2-one, 2-trifluoroethoxy-1,3,2-dioxaphospholan-2-one and 2-methoxyethoxy-1,3,2-dioxaphospholan-2-one.

Examples of nitrile compounds include acetonitrile. Examples of amide compounds include DMF. Examples of sulfones include dimethyl sulfone and diethyl sulfone.

These solvents may be used alone or two or more thereof may be used in combination.

The concentration of the electrolyte in the electrolytic solution is preferably 1.2 to 5.0 mol/L, more preferably 1.5 to 4.5 mol/L, still more preferably 1.8 to 4.0 mol/L, and particularly preferably 2.0 to 3.5 mol/L.

Since such an electrolytic solution has an appropriate viscosity, it can form a liquid film between the coated negative electrode active material particles, and impart a lubrication effect (an ability to adjust the position of coated negative electrode active material particles) to the coated negative electrode active material particles.

The negative electrode active material layer may further contain a conductive assistant in addition to the conductive assistant that is contained as necessary in the coating layer of the above coated negative electrode active material particles. While the conductive assistant that is contained as necessary in the coating layer is integrated with the coated negative electrode active material particles, the conductive assistant contained in the negative electrode active material layer can be distinguished in that it is contained separately from the coated negative electrode active material particles.

As the conductive assistant that the negative electrode active material layer may contain, those described in <Coated negative electrode active material particles for lithium ion batteries> can be used.

When the negative electrode active material layer contains a conductive assistant, the total content of the conductive assistant contained in the negative electrode active material layer and the conductive assistant contained in the coating layer based on the weight of the negative electrode active material layer excluding the electrolytic solution is preferably less than 4 wt% and more preferably less than 3 wt%. On the other hand, the total content of the conductive assistant contained in the negative electrode active material layer and the conductive assistant contained in the coating layer based on the weight of the negative electrode active material layer excluding the electrolytic solution is preferably 2.5 wt% or more.

The negative electrode active material layer preferably does not contain a binder.

Here, in this specification, the binder refers to an agent that cannot reversibly fix the coated negative electrode active material particles to each other and the coated negative electrode active material particles to the current collector, and known solvent-drying type binders for lithium ion batteries such as starch, polyvinylidene fluoride, polyvinyl alcohol, carboxymethyl cellulose, polyvinylpyrrolidone, tetrafluoroethylene, styrene butadiene rubber, polyethylene and polypropylene may be exemplified.

These binders are used by being dissolved or dispersed in a solvent, and are solidified by volatilizing and distilling off the solvent to irreversibly fix the coated negative electrode active material particles to each other and the coated negative electrode active material particles to the current collector.

That is, the negative electrode active material layer is preferably formed of a non-bound component of the coated negative electrode active material particles. It is called a non-bound component because the position of the negative electrode active material particles is not fixed in the negative electrode active material layer, and the negative electrode active material particles and the negative electrode active material particles and the current collector are not irreversibly fixed.

When the negative electrode active material layer is a non-bound component, this is preferable because, since the negative electrode active material particles are not irreversibly fixed to each other, it is possible to separate the negative electrode active material particles from each other without causing breakage at the interface, and even if stress is applied to the negative electrode active material layer, the movement of the negative electrode active material particles can prevent the negative electrode active material layer from being broken.

The negative electrode active material layer which is a non-bound component can be obtained by a method such as using a negative electrode active material layer slurry containing negative electrode active material particles, an electrolytic solution or the like and not containing a binder as the negative electrode active material layer.

The negative electrode active material layer may contain an adhesive resin. The adhesive resin is a resin that does not solidify and has adhesiveness even if the solvent component is volatilized and dried, and is a material different and distinguished from the binder. In addition, while the coating layer constituting the coated negative electrode active material particles is fixed to the surface of negative electrode active material particles, the adhesive resin reversibly fixes the surfaces of the negative electrode active material particles to each other. The adhesive resin can be easily separated from the surface of negative electrode active material particles, but the coating layer cannot be easily separated. Therefore, the coating layer and the adhesive resin are different materials.

As the adhesive resin, polymers which contain at least one low Tg monomer selected from the group consisting of vinyl acetate, 2-ethylhexyl acrylate, 2-ethylhexyl methacrylate, butyl acrylate and butyl methacrylate as an essential constituent monomer, and in which the total weight proportion of the low Tg monomers based on the total weight of the constituent monomers is 45 wt% or more may be exemplified. When the adhesive resin is used, it is preferable to use 0.01 to 10 wt% of the adhesive resin based on the total weight of the negative electrode active material particles.

In consideration of battery performance, the thickness of the negative electrode active material layer is preferably 150 to 600 um and more preferably 200 to 450 $\mu$m.

In addition, the weight proportion of the polymer compound contained in the negative electrode for lithium ion batteries based on the weight of the negative electrode for lithium ion batteries is preferably 1 to 10 wt%.

(Negative Electrode Current Collector)

It is preferable that the negative electrode for lithium ion batteries include a negative electrode current collector, and the negative electrode active material layer be provided on the surface of the current collector.

Examples of materials constituting the negative electrode current collector include metal materials such as copper, aluminum, titanium, stainless steel, nickel and alloys thereof, and calcined carbon, conductive polymer materials, and conductive glass.

The shape of the negative electrode current collector is not particularly limited, and a sheet-like current collector made of the above material and a deposition layer including fine particles composed of the above material may be used.

It is preferable that the negative electrode for lithium ion batteries of the present invention include a resin current collector made of a conductive polymer material, and the negative electrode active material layer be provided on the surface of the resin current collector.

As the conductive polymer material constituting the resin current collector, for example, those obtained by adding a conductive material to a resin can be used.

As the conductive material constituting the conductive polymer material, the same conductive assistant which is an optional component for the coating layer can be preferably used.

Examples of resins constituting the conductive polymer material include polyethylene (PE), polypropylene (PP), polymethylpentene (PMP), polycycloolefin (PCO), polyethylene terephthalate (PET), polyethernitrile (PEN), polytetrafluoroethylene (PTFE), styrene butadiene rubber (SBR), polyacrylonitrile (PAN), polymethyl acrylate (PMA), polymethyl methacrylate (PMMA), polyvinylidene fluoride (PVdF), epoxy resins, silicone resins and mixtures thereof.

In consideration of electrical stability, polyethylene (PE), polypropylene (PP), polymethylpentene (PMP) and polycycloolefin (PCO) are preferable, and polyethylene (PE), polypropylene (PP) and polymethylpentene (PMP) are more preferable.

The resin current collector can be obtained by known methods described in Japanese Patent Application Publication No. 2012-150905, WO 2015/005116 and the like.

The thickness of the negative electrode current collector is not particularly limited and is preferably 5 to 150 $\mu$m.

The negative electrode for lithium ion batteries of the present invention can be produced by, for example, applying a powder (a negative electrode precursor) obtained by mixing coated negative electrode active material particles swollen with the compound (A) of the present invention and as necessary, a conductive assistant and the like to a negative electrode current collector, pressing it with a press machine to form a negative electrode active material layer, and then injecting an electrolytic solution.

In addition, the negative electrode precursor may be applied onto a mold release film and pressed to form a negative electrode active material layer, the negative electrode active material layer may be transferred to the negative electrode current collector, and an electrolytic solution may be then injected. In the negative electrode for lithium ion batteries of the present invention, since the adhesion between the coated negative electrode active material particles is excellent, even if the electrolytic solution is injected, the structure of the negative electrode active material layer can be maintained, and thus the mechanical strength is excellent, and cycle characteristics are also excellent.

Since no unnecessary solvent is used when the negative electrode for lithium ion batteries of the present invention is produced, there is no need to use a large drying furnace or a solvent collection mechanism that is required in the conventional solvent removal process.

<Lithium Ion Battery>

The lithium ion battery of the present invention includes the negative electrode for lithium ion batteries of the present invention.

The lithium ion battery of the present invention includes the negative electrode for lithium ion batteries of the present invention, a separator, and a positive electrode.

(Separator)

Examples of separators include known separators for lithium ion batteries such as polyethylene or polypropylene porous films, laminated films of a porous polyethylene film and a porous polypropylene, non-woven fabrics composed of synthetic fibers (polyester fibers, aramid fibers, etc.), glass fibers or the like, and those with ceramic fine particles such as silica, alumina, and titania adhered to their surfaces.

(Positive Electrode)

The positive electrode preferably includes a positive electrode active material layer and a positive electrode current collector.

The positive electrode active material layer contains positive electrode active material particles.

Examples of positive electrode active material particles include composite oxides containing lithium and transition metals {composite oxides containing one transition metal ($LiCoO_2$, $LiNiO_2$, $LiAlMnO_4$, $LiMnO_2$, $LiMn_2O_4$, etc.), composite oxides containing two transition metal elements (for example, $LiFeMnO_4$, $LiNi_{1-x}CO_xO_2$, $LiMn_{1-y}CO_yO_2$, $LiNi_{1/3}CO_{1/3}Al_{1/3}O_2$ and $LiNi_{0.8}CO_{0.15}Al_{0.05}O_2$), composite oxides containing three or more metal elements [for example, $LiM_aM'_bM''_cO_2$ (M, M' and M" are respectively different transition metal elements, a+b+c=1 is satisfied, for example, $LiNi_{1/3}Mn_{2/3}CO_{1/3}O_2$), etc. ] and the like}, lithium-containing transition metal phosphates (for example, $LiFePO_4$, $LiCoPO_4$, $LiMnPO_4$ and $LiNiPO_4$), transition metal oxides (for example, $MnO_2$ and $V_2O_5$), transition metal sulfides (for example, $MoS_2$ and $TiS_2$) and conductive polymers (for example, polyaniline, polypyrrole, polythiophene, polyacetylene, polypphenylene and polyvinylcarbazole), and two or more thereof may be used in combination.

Here, lithium-containing transition metal phosphates may be obtained by replacing some of transition metal sites with other transition metals.

In consideration of electrical characteristics of the battery, the volume average particle size of the positive electrode active material particles is preferably 0.01 to 100 $\mu$m, more preferably 0.1 to 35 $\mu$m, and still more preferably 2 to 30 $\mu$m.

The positive electrode active material particles may be coated positive electrode active material particles in which at least a part of the surface is covered with a coating layer containing a polymer compound.

When the periphery of the positive electrode active material particles is covered with a coating layer, the volume change of the positive electrode is reduced, and the expansion of the positive electrode can be reduced.

As the coating layer, the same coating layer described in the above coated negative electrode active material particles for lithium ion batteries of the present invention can be preferably used.

The positive electrode active material layer preferably does not contain a binder.

The binder is one described above with regard to the negative electrode.

The positive electrode active material layer may contain an adhesive resin.

As the adhesive resin, the same adhesive resin which is an optional component for the negative electrode active material layer can be preferably used.

The positive electrode active material layer may contain a conductive assistant.

As the conductive assistant, the same conductive material as the conductive filler contained in the negative electrode active material layer can be preferably used.

The weight proportion of the conductive assistant in the positive electrode active material layer is preferably 2 to 10 wt%.

The positive electrode active material layer may contain an electrolytic solution.

As the electrolytic solution, those described in the negative electrode active material layer can be appropriately selected and used.

The thickness of the positive electrode active material layer is not particularly limited, and in consideration of battery performance, it is preferably 150 to 600 um and more preferably 200 to 450 $\mu$m.

As the positive electrode current collector, a known metal current collector and a resin current collector composed of a conductive resin composition containing a conductive material and a resin (resin current collectors described in Japanese Patent Application Publication No. 2012-150905, WO 2015/005116 and the like) can be used.

In consideration of battery characteristics and the like, the positive electrode current collector is preferably a resin current collector.

The thickness of the positive electrode current collector is not particularly limited and is preferably 5 to 150 $\mu$m.

The positive electrode can be produced by, for example, a method of applying a mixture containing positive electrode active material particles and an electrolytic solution to the surface of a positive electrode current collector or a substrate, and removing an excess electrolytic solution.

When the positive electrode active material layer is formed on the surface of the substrate, the positive electrode active material layer may be combined with the positive electrode current collector by a method such as transfer.

The mixture may contain, as necessary, a conductive assistant, an adhesive resin and the like.

(Method for Producing Lithium Ion Battery)

The lithium ion battery of the present invention can be produced, for example, by laminating a positive electrode, a separator and the negative electrode for lithium ion batteries of the present invention in this order and then injecting an electrolytic solution as necessary.

Examples

Next, the present invention will be described in detail with reference to examples, but the present invention is not limited to the examples as long as it does not depart from the spirit of the present invention. Here, unless otherwise specified, parts means parts by weight, and % means wt%.

<Production of Polymer Compound>

Monomers used for producing a polymer compound are as follows.

AA: acrylic acid
MAA: methacrylic acid
MMA: methyl methacrylate
BMA: butyl methacrylate
EHMA: 2-ethylhexyl methacrylate
PCMA: (2-oxo-1,3-dioxolan-4-yl)methyl acrylate

(Production of Polymer Compound 1)

150 parts of DMF was put into a 4-neck flask including a stirrer, a thermometer, a reflux cooling tube, a dropping funnel and a nitrogen gas inlet tube, and the temperature was raised to 75°C. Next, a monomer composition in which 92 parts of acrylic acid and 8 parts of methyl methacrylate were dissolved in 50 parts of DMF and an initiator solution in which 0.1 parts of 2,2'-azobis(2,4-dimethylvaleronitrile) and 0.4 parts of 2,2'-azobis(2-methylbutyronitrile) were dissolved in 30 parts of DMF were continuously added dropwise over 2 hours through a dropping funnel with stirring while blowing nitrogen into the 4-neck flask to cause radical polymerization. After dropwise addition was completed, the temperature was raised to 80°C, and the reaction was continued for 2 hours. Next, the temperature was raised to 85°C, the reaction was continued for 2 hours, additionally, the temperature was raised to 95°C, the reaction was continued for 1 hour, and a copolymer solution having a resin concentration of 30% was obtained. The obtained copolymer solution was transferred to a Teflon (registered trademark) bat and dried under a reduced pressure at 100°C and 0.01 MPa for 3 hours, and DMF was distilled off to obtain a copolymer. This copolymer was coarsely pulverized with a hammer and then additionally pulverized with a coffee mill [Force Mill, commercially available from OSAKA CHEMICAL Co., Ltd.] to produce a powdered polymer compound 1.

(Degree of Swelling with respect to Ethylene Carbonate)

Ethylene carbonate (EC) was prepared as the compound (A).
Moreover, the polymer compound 1 was additionally pulverized with an agate mortar to obtain a fine powder. Next, a 10×40×0.2 mm metal frame coated with a mold release agent was placed on a 0.1 mm Teflon (registered trademark) sheet, and the metal frame whose inside was covered with the powdered polymer compound and covered with a Teflon (registered trademark) sheet, and placed on a desktop type test press machine [SA-302, commercially available from Tester Sangyo Co., Ltd.] whose temperature was controlled at 110°C for the upper table and 110°C for the lower table in the center of the table. Pressing was performed at a pressure of 1 MPa for 60 seconds. After pressing, the inside of the metal frame was additionally covered with a powder polymer compound, and similarly, an operation of pressing at a pressure of 1 MPa for 60 seconds was repeated until there were no opaque parts or bubbles in the metal frame, and a test piece was obtained by removing it from the metal frame. This test piece was immersed in the compound (A) at 50°C for 3 days and brought into a saturated liquid absorption state.
Then, the degree of swelling was obtained from the weight change in the test piece between before and after liquid absorption according to the following formula. The results are shown in Table 1.

degree of swelling [wt%]=[(test piece weight after liquid

absorption-test piece weight before liquid absorption)/test piece weight before liquid absorption]×100

(Degree of Swelling with respect to Electrolytic Solution A)

An electrolytic solution A was produced by dissolving 10 parts of LiFSI[LiN(FSO$_2$)$_2$] in a solvent mixture of 3.5 parts of ethylene carbonate (EC) and 5 parts of propylene carbonate (PC) .

Moreover, the polymer compound 1 was additionally pulverized with an agate mortar to obtain a fine powder. Next, a 10×40×0.2 mm metal frame coated with a mold release agent was placed on a 0.1 mm Teflon (registered trademark) sheet, and the metal frame whose inside was covered with the powdered polymer compound and covered with a Teflon (registered trademark) sheet, and placed on a desktop type test press machine [SA-302, commercially available from Tester Sangyo Co., Ltd.] whose temperature was controlled at 110°C for the upper table and 110°C for the lower table in the center of the table. Pressing was performed at a pressure of 1 MPa for 60 seconds. After pressing, the inside of the metal frame was additionally covered with a powder polymer compound, and similarly, an operation of pressing at a pressure of 1 MPa for 60 seconds was repeated until there were no opaque parts or bubbles in the metal frame, and a test piece was obtained by removing it from the metal frame. This test piece was immersed in the electrolytic solution A at 50°C for 3 days and brought into a saturated liquid absorption state.

Then, the degree of swelling was obtained from the weight change in the test piece between before and after liquid absorption according to the following formula. The results are shown in Table 1.

```
degree of swelling [wt%]=[(test piece weight after liquid

absorption-test piece weight before liquid absorption)/test piece weight before liquid absorption]×100
```

(Production of Polymer Compounds 2 to 6)

Polymer compounds 2 to 6 were produced in the same manner as in the production of the polymer compound 1 except that the mixing proportion (wt%) of the monomer composition was changed as shown in Table 1.
In addition, in the same manner as in the polymer compound 1, the degree of swelling with respect to ethylene carbonate and the electrolytic solution A was measured. The results are shown in Table 1.

[Table 1]

| Polymer compound | | 1 | 2 | 3 | 4 | 5 | 6 |
|---|---|---|---|---|---|---|---|
| Polymer | AA | 92 | 85 | - | 85 | 50 | - |
| | MAA | - | - | 85 | - | - | 5 |
| | MMA | 8 | - | - | 10 | 50 | 15 |
| | BMA | - | 15 | - | - | - | - |
| | EHMA | - | - | 15 | - | - | 80 |
| | PCMA | - | - | - | 5 | - | - |
| Degree of swelling with respect to EC (wt%) | | 180 | 190 | 160 | 200 | 220 | 8 |
| Degree of swelling with respect to electrolytic solution A (wt%) | | 5 | 9 | 7 | 6 | 80 | 8 |

(Degree of Swelling with respect to Compound (A))

A compound (A) having mixing proportions (wt%) shown in Table 2 was prepared.
In the same manner as in the measurement of the degree of swelling with respect to ethylene carbonate, the degree of swelling of the polymer compounds 1 to 6 with respect to each compound (A) was measured. The results are shown in Table 2.
Here, each polymer compound and the compound (A) used for the measurement corresponded to the polymer compound and the compound (A) used when respective coated negative electrode active material particles for lithium ion batteries to be described below were produced.

[Table 2]

| Polymer compound | | 1 | 2 | 3 | 4 | 5 | 6 |
|---|---|---|---|---|---|---|---|
| Compound (A) | EC | 100 | - | 93 | - | 100 | 100 |
| | Sf | - | 100 | - | 90 | - | - |
| | VC | - | - | 7 | 10 | - | - |
| Degree of swelling with respect to compound (A) (wt%) | | 180 | 280 | 162 | 370 | 220 | 8 |

(Degree of Swelling with respect to Electrolytic Solution)

An electrolytic solution having mixing proportions (wt%) shown in Table 3 was prepared.

In the same manner as in the measurement of the degree of swelling with respect to the electrolytic solution A, the degree of swelling of the polymer compounds 1 to 6 with respect to each electrolytic solution was measured. The results are shown in Table 3.

Here, each polymer compound and the electrolytic solution used for the measurement corresponded to the polymer compound and the electrolytic solution (the compound (A) described in Table 4 was also calculated as a part of the electrolytic solution) used when respective negative electrode for lithium ion batteries to be described below were produced.

[Table 3]

| Polymer compound | | 1 | 2 | 3 | 4 | 5 | 6 |
|---|---|---|---|---|---|---|---|
| Electrolytic solution | LiFSI | 50 | 50 | 50 | 50 | 50 | 50 |
| | PC | 25 | 25 | 25 | 25 | 25 | 25 |
| | EC | 25 | - | 24.5 | - | 25 | 25 |
| | Sf | - | 25 | - | 24.5 | - | - |
| | VC | - | - | 0.5 | 0.5 | - | - |
| Degree of swelling with respect to electrolytic solution (wt%) | | 5 | 20 | 7 | 26 | 80 | 8 |

<Production of Coated Negative Electrode Active Material Particles>

The materials used for producing coated negative electrode active material particles are as follows.

(Negative electrode active material particles)

HC: hard carbon (product name CARBOTRON (registered trademark) PS(F), commercially available from Kureha Battery Materials Japan Co., Ltd.)

(Compound (A))

EC: ethylene carbonate
Sf: tetrahydrothiophene 1,1-dioxide
VC: vinylene carbonate

(Conductive assistant)

AB: acetylene black [Denka Black (registered trademark), commercially available from Denka Co., Ltd.]

(Production of Coated Negative Electrode Active Material Particles 1)

A polymer compound solution was prepared by dissolving the polymer compound 1 and ethylene carbonate (EC) in methanol at a concentration of 5.0 wt%.

When the negative electrode active material particles were put into a Universal Mixer High Speed Mixer FS25 [commercially available from EARTHTECHNICA Co., Ltd.] and stirred at room temperature and 720 rpm, the polymer compound solution was added dropwise over 2 minutes and additionally stirred for 5 minutes.

Next, under stirring, 3 parts of acetylene black (AB) as a conductive assistant was added over 2 minutes in a divided manner, and stirring was continued for 30 minutes.

Then, the pressure was reduced to 0.01 MPa while stirring was maintained, the temperature was then raised to 80°C while stirring and the degree of pressure reduction were maintained, and volatile components were distilled off while stirring, the degree of pressure reduction and the temperature were maintained for 3 hours.

The obtained powder was classified with a sieve with an opening of 200 um to produce coated negative electrode active material particles 1.

Here, Table 4 shows mixing proportions (wt%) of respective materials used for producing coated negative electrode active material particles 1.

(Measurement of Angle of Repose)

A glass funnel (the length of the funnel foot: 50 mm, and the inner diameter: 4 mm) was horizontally placed so that the tip of the funnel was positioned 10 cm above the surface of the metal plate placed horizontally.

The coated negative electrode active material particles 1 having an apparent volume of 15 ml were supplied to the funnel using a spoon with a capacity of 15 ml, and the coated negative electrode active material particles 1 dropped from the funnel formed a conical laminate on the metal plate.

Under a condition of 20°C, the angle formed between the part corresponding to the generatrix of the cone formed by the laminate and the surface of the metal plate was measured using a three-dimensional shape measuring instrument VR-3200 (commercially available from Keyence Corporation).

The angles were obtained at 8 equal parts of the bottom of the cone divided by 45 degrees, and the average value was used as the angle of repose (°) of the coated negative electrode active material particles 1. The results are shown in Table 4.

Here, the angle of repose was an index indicating the surface state of the coated negative electrode active material particles 1, and a larger angle of repose indicated that the coating layer was swollen due to the compound (A).

(Production of Coated Negative Electrode Active Material Particles 2 to 10)

Coated negative electrode active material particles 2 to 10 were produced in the same manner as in the production of the coated negative electrode active material particles 1 except that the mixing proportions (wt%) of respective materials were changed as shown in Table 4, DMF was used as a solvent in place of methanol in the coated negative electrode active material particles 3 and 5, tetrahydrofuran was used as a solvent in place of methanol in the coated negative electrode active material particles 6, and the drying temperature was changed to 140°C in the coated negative electrode active material particles 3 and 5.

In addition, the angle of repose (°) was measured in the same manner as in the coated negative electrode active material particles 1. The results are shown in Table 4.

Here, since no polymer compound was added when particles shown as coated negative electrode active material particles 7 were produced, no coating layer was formed, and strictly speaking, they cannot be said to be coated negative electrode active material particles, but they are shown as coated negative electrode active material particles 7 for convenience.

[Table 4]

| Coated negative electrode active material particles | | 1 | 2 | 3 | 4 | 5 | 6 | 7 | 8 | 9 | 10 |
|---|---|---|---|---|---|---|---|---|---|---|---|
| Negative electrode actve material particles | HC | 92.5 | 93.0 | 92.5 | 93.0 | 92.5 | 92.5 | 94.0 | 95.5 | 93.5 | 93.7 |
| Polymer compound | 1 | 3.0 | - | - | - | - | - | 3.0 | - | 3.0 | 3.0 |
| | 2 | - | 3.0 | - | - | - | - | - | - | - | - |
| | 3 | - | - | 3.0 | - | - | - | - | - | - | - |
| | 4 | - | - | - | 3.0 | - | - | - | - | - | - |
| | 5 | - | - | - | - | 3.0 | - | - | - | - | - |
| | 6 | - | - | - | - | - | 3.0 | - | - | - | - |
| Compound (A) | EC | 1.5 | - | 1.4 | - | 1.5 | 1.5 | - | 1.5 | 0.5 | 0.3 |
| | Sf | - | 1.0 | - | 0.9 | - | - | - | - | - | - |
| | VC | - | - | 0.1 | 0.1 | - | - | - | - | - | - |
| Conductive assistant | AB | 3.0 | 3.0 | 3.0 | 3.0 | 3.0 | 3.0 | 3.0 | 3.0 | 3.0 | 30 |
| Angle of repose (°) | | 32 | 34 | 33 | 34 | 36 | 34 | 22 | 19 | 30 | 28 |

<Production of Electrode Precursor>

The materials used for producing the negative electrode active material layer are as follows.

(Transport medium)
EC: ethylene carbonate
(Binder)
SBR: styrene butadiene rubber (product name BM-400B, commercially available from Zeon Corporation)
(Conductive assistant)
CNF: carbon nanofiber (product name VGCF-H, commercially available from Showa Denko K.K.)

(Production of Negative Electrode Precursor 1)

A conductive assistant was added to the coated negative electrode active material particles 1 and mixed. Then, pressing was performed at a pressure of 1.4 MPa for about 10 seconds to produce a negative electrode precursor 1 having a thickness of 350 um.
Table 5 shows mixing proportions (wt%) of respective materials used for producing the negative electrode precursor 1.

(Measurement of Stress at Break)

The produced negative electrode precursor 1 was measured with reference to Method A described in JIS K 7074: 1988. A three-point bending jig was installed in Autograph [AGS-X 10kN, commercially available from Shimadzu Corporation], and the negative electrode precursor 1 molded to $100 \times 15$ mm was placed on a slit with a distance of 80 mm between fulcrums. The test was performed using a 50 N load cell at a test speed of 1 mm/min. The stress at break was analyzed using Autograph dedicated software TRAPEZIUM X with the point at which the stress dropped sharply as the breaking point on the graph.

(Production of Negative Electrode Precursors 2 to 7 and 9 to 11)

Negative electrode precursors 2 to 7 and 9 to 11 were produced in the same manner as in the production of the negative electrode precursor 1 except that mixing proportions (wt%) of respective materials were changed as shown in Table 5.

In addition, the stress at break was measured in the same manner as in the negative electrode precursor 1. The results are shown in Table 5.

(Production of Negative Electrode Precursor 8)

95 parts of the coated negative electrode active material particles 8, 20 parts of SBR (a solid content of 40 wt%), 1 part of CNF, and 10 parts of deionized water were put into a planetary stirring type mixing and kneading device {Awatori Rentaro [commercially available from Thinky Corporation]}, and mixed at 2,000 rpm for 5 minutes to obtain a negative electrode precursor slurry. The negative electrode precursor slurry was applied onto a copper foil and dried in a wind dryer at 100°C for 1 hour, additionally dried in a decompression dryer at a degree of pressure reduction of -0.1 MPa (gauge pressure) and 100°C for 3 hours, and pressing was then performed at a pressure of 1.4 MPa for about 10 seconds to produce a negative electrode precursor 8.

[Table 5]

| Negative electrode precursor | | 1 | 2 | 3 | 4 | 5 | 6 | 7 | 8 | 9 | 10 | 11 |
|---|---|---|---|---|---|---|---|---|---|---|---|---|
| Coated negative electrode active material particles | 1 | 99 | - | - | - | - | - | - | - | - | - | - |
| | 2 | - | 99 | - | - | - | - | - | - | - | - | - |
| | 3 | - | - | 99 | - | - | - | - | - | - | - | - |
| | 4 | - | - | - | 99 | - | - | - | - | - | - | - |
| | 5 | - | - | - | - | 99 | - | - | - | - | - | - |
| | 6 | - | - | - | - | - | 99 | - | - | - | - | - |
| | 7 | - | - | - | - | - | - | 99 | - | 95 | - | - |
| | 8 | - | - | - | - | - | - | - | 95 | - | - | - |
| | 9 | - | - | - | - | - | - | - | - | - | 99 | - |
| | 10 | - | - | - | - | - | - | - | - | - | - | 99 |
| Transport medium | EC | - | - | - | - | - | - | - | - | 5 | - | - |
| Binder | SBR | - | - | - | - | - | - | - | 4 | - | - | - |
| Conductive assistant | CNF | 1 | 1 | 1 | 1 | 1 | 1 | 1 | 1 | 1 | 1 | 1 |
| Stress at break (kPa) | | 980 | 1120 | 960 | 940 | 1010 | 110 | 0.5 | 870 | 1500 | 920 | 870 |

<Production of Negative Electrode for Lithium Ion Batteries>

Materials used for producing lithium ion batteries are as follows.

(Electrolytic solution)

LiFSI: $LiN(FSO_2)_2$
PC: propylene carbonate
EC: ethylene carbonate
Sf: tetrahydrothiophene 1,1-dioxide
(Negative electrode current collector)
copper foil (thickness: 20 um)

(Example 1)

(Production of negative electrode for lithium ion batteries 1)

100 parts of the obtained negative electrode precursor 1 was laminated on one side of a negative electrode current collector. Then, an electrolytic solution prepared by dissolving 10 parts of LiFSI in a solvent mixture of 3.5 parts of EC and 5 parts of PC was injected to form a negative electrode active material layer 1 (a film thickness of 350 um), and a negative electrode for lithium ion batteries 1 having a thickness of 370 um according to Example 1 was produced.
Table 6 shows mixing proportions (parts by weight) of the negative electrode precursor 1 and the electrolytic solution used for producing the lithium ion battery 1.

(Measurement of Stress at Break)

The stress at break of the negative electrode for lithium ion batteries 1 was measured with reference to Method A described in JIS K 7074:1988. A three-point bending jig was installed in Autograph [AGS-X 10kN, commercially available from Shimadzu Corporation], and the negative electrode active material layer for lithium ion batteries 1 molded to 100×15 mm on a liquid absorption paper as a substrate was placed on a slit with a distance of 80 mm between fulcrums (after the electrolytic solution was injected, it was left under an atmosphere with a dew point of -40°C and a room temperature of 20°C for 12 hours). The test was performed using a 50 N load cell at a test speed of 1 mm/min. The stress at break was analyzed using Autograph dedicated software TRAPEZIUM X with the point at which the stress dropped sharply as the breaking point on the graph.

(Shape Retention Evaluation)

The shape retention of the negative electrode for lithium ion batteries 1 was evaluated by observing the negative electrode for lithium ion batteries 1 when the electrolytic solution was injected for 1 minute, and the shape retention was evaluated based on the following criteria.

O: no change
Δ: some defects occurred after the electrolytic solution was injected
×: collapsed due to impact immediately after the electrolytic solution was injected

(Production of Positive Electrode)

When 94 parts of $LiNi_{0.8}CO_{0.15}Al_{0.05}O_2$ [commercially available from Toda Kogyo Corporation, a volume average particle size (D50 particle size) of 6.5 um, denoted as NCA] as a positive electrode active material particles was put into a Universal Mixer High Speed Mixer FS25 [commercially available from EARTHTECHNICA Co., Ltd.], and stirred at room temperature for 720 rpm, a 5% toluene solution of the polymer compound 6 was added dropwise over 2 minutes so that the solid content weight was 3 parts and the mixture was additionally stirred for 5 minutes.
Next, under stirring, 3 parts of acetylene black [Denka Black (registered trademark), commercially available from Denka Co., Ltd.] as a conductive assistant was added over 2 minutes in a divided manner, and stirring was continued for 30 minutes. Then, the pressure was reduced to 0.01 MPa while stirring was maintained, the temperature was then raised to 150°C while stirring and the degree of pressure reduction were maintained, and volatile components were distilled off while stirring, the degree of pressure reduction and the temperature were maintained for 8 hours. The obtained powder was classified with a sieve with an opening of 212 um to obtain coated positive electrode active material particles. 1 part of CNF was added to 99 parts of the coated positive electrode active material particles and mixed. Then, pressing was performed at a pressure of 1.4 MPa for about 10 seconds to produce a positive electrode precursor having a thickness of 280 um. The electrolytic solution shown in Table 6 was injected to 100 parts by weight of the positive electrode precursor placed on an aluminum current collector foil to obtain a positive electrode for lithium ion batteries.

(Cycle Test)

The negative electrode for lithium ion batteries 1 was combined with a positive electrode for lithium ion batteries prepared as a counter electrode via a separator (#3501, commercially available from Celgard LLC) to produce a test lithium ion battery.
For the produced test lithium ion battery, the DC resistance value (initial DCR) of the 1st cycle and the DC resistance value (100 cycle DCR) after 100 cycles were measured.
The initial DCR was calculated from the voltage drop for 10 seconds from when the 1st cycle discharge started, and the 100 cycle DCR was calculated from the voltage drop for 10 seconds from when the 100th cycle discharge started. The results are shown in Table 6.

The battery capacity (initial discharging capacity) during initial charging and the battery capacity (discharging capacity after 100 cycles) during the 100th cycle charging in the cycle test were measured. The discharging capacity retention rate was calculated from the following formula. The results are shown in Table 6. Here, a larger value indicates less deterioration of the battery. discharging capacity retention rate (%)=(100th cycle discharging capacity/1st cycle discharging capacity)×100

(Examples 2 to 6 and Comparative Examples 1 to 5)

Negative electrode for lithium ion batteries 2 to 11 were produced in the same manner as in the production of the negative electrode for lithium ion batteries 1 except that mixing proportions (parts by weight) of the negative electrode precursor and the electrolytic solution were changed as shown in Table 6, and respective measurements and evaluations were performed.

| | | Example 1 | Example 2 | Example 3 | Example 4 | Comparative Example 1 | Comparative Example 2 | Comparative Example 3 | Comparative Example 4 | Comparative Example 5 | Example 5 | Example 6 |
|---|---|---|---|---|---|---|---|---|---|---|---|---|
| Negative electrode for lithium ion batteries | | 1 | 2 | 3 | 4 | 5 | 6 | 7 | 8 | 9 | 10 | 11 |
| Negative electrode precursor | 1 | 100 | - | - | - | - | - | - | - | - | - | - |
| | 2 | - | 100 | - | - | - | - | - | - | - | - | - |
| | 3 | - | - | 100 | - | - | - | - | - | - | - | - |
| | 4 | - | - | - | 100 | - | - | - | - | - | - | - |
| | 5 | - | - | - | - | 100 | - | - | - | - | - | - |
| | 6 | - | - | - | - | - | 100 | - | - | - | - | - |
| | 7 | - | - | - | - | - | - | 100 | - | - | - | - |
| | 8 | - | - | - | - | - | - | - | 100 | - | - | - |
| | 9 | - | - | - | - | - | - | - | - | 100 | - | - |
| | 10 | - | - | - | - | - | - | - | - | - | 100 | - |
| | 11 | - | - | - | - | - | - | - | - | - | - | 100 |
| Electrolytic solution | LiFSI | 10 | 10 | 10 | 10 | 10 | 10 | 10 | 10 | 10 | 10 | 10 |
| | PC | 5 | 5 | 5 | 5 | 5 | 5 | 5 | 5 | 5 | 5 | 5 |
| | EC | 3.5 | - | 3.5 | - | 3.5 | 3.5 | 5 | 3.5 | - | 4.5 | 4.7 |
| | Sf | - | 4 | - | 4 | - | - | - | - | - | - | - |
| Stress at break (kPa) | | 320 | 370 | 340 | 310 | 520 | 20 | 0.02 | 160 | ' 0.02 | 280 | 200 |
| Shape retention test | | ○ | ○ | ○ | ○ | ○ | △ | × | △ | × | ○ | ○ |
| Initial DCR ($\Omega$ cm$^2$) | | 16.1 | 16.0 | 16.3 | 16.2 | 19.5 | 17.4 | 16.2 | 18.6 | 16.5 | 16.1 | 16.3 |
| 100 cycle DCR ($\Omega$ cm$^2$) | | 18.7 | 17.9 | 16.9 | 16.9 | 20.6 | 22.2 | 21.2 | 20.5 | 21.6 | 19.2 | 20.0 |
| Discharging capacity retention rate (%) | | 74.5 | 75.2 | 76.5 | 77.3 | 69.7 | 70.9 | 70.5 | 71.7 | 71.3 | 74.2 | 72.1 |

In Examples 1 to 6 in which the coating layer constituting coated negative electrode active material particles contained a specific polymer compound and the compound (A), it was confirmed that a negative electrode for lithium ion batteries having excellent mechanical strength and excellent cycle characteristics was obtained.

On the other hand, it was thought that, in Comparative Example 1 in which the polymer constituting the coating layer did not contain a predetermined amount of (meth)acrylic acid, since the degree of swelling with respect to the electrolytic solution was too large, the conductive assistant contained in the coating layer separated from the coated negative electrode active material particles, the conduction path was broken, and cycle characteristics deteriorated.

In addition, it was thought that, in Comparative Example 2 in which the polymer constituting the coating layer did not contain a predetermined amount of (meth)acrylic acid, since the polymer did not swell with respect to the compound (A), the adhesion between the coated negative electrode active material particles was not sufficient, the conduction path was broken and cycle characteristics deteriorated.

In addition, it was thought that, in Comparative Example 3 in which the coating layer contained no compound (A), the adhesion between the coated negative electrode active material particles was insufficient, the mechanical strength of the negative electrode for lithium ion batteries was insufficient, the conduction path was broken over time, and cycle characteristics deteriorated.

In addition, it was thought that, in Comparative Example 4 having no coating layer, the shape retention of the negative electrode for lithium ion batteries was evaluated as insufficient, the conduction path was broken over time, and cycle characteristics deteriorated.

In addition, it was thought that, in Comparative Example 5 in which the coating layer did not contain the compound (A) and ethylene carbonate was added as a transport medium, and in the negative electrode precursor 9, EC was solidified according to pressing when the negative electrode precursor 9 was produced, the mechanical strength was high, but according to injection of the electrolytic solution when the lithium ion electrode was produced, the solidified EC dissolved and the adhesion point appeared, and thus the mechanical strength of the negative electrode for lithium ion batteries was insufficient, and the conduction path was broken over time, and cycle characteristics deteriorated.

Hereinafter, other embodiments of the coated negative electrode active material particles for lithium ion batteries, negative electrode for lithium ion batteries, lithium ion battery, and method for producing coated negative electrode active material particles for lithium ion batteries will be disclosed.

In recent years, there has been a strong demand to reduce carbon dioxide emission amounts in order to protect the environment. In the automobile industry, expectations have become higher for reduction of the carbon dioxide emission amount through the introduction of electric vehicles (EV) and hybrid electric vehicles (HEV), and the development of secondary batteries for driving motors, which holds the key to practical use of these devices, has been earnestly performed. As secondary batteries, lithium ion batteries that can achieve a high energy density and a high output density have been focused upon.

For example, Japanese Patent Application Publication No. 2017-160294 discloses an active material coating resin composition containing a polymer of a monomer composition including an ester compound of a monohydric fatty alcohol having 1 to 12 carbon atoms and (meth)acrylic acid and an anionic monomer, where the polymer has an acid value of 30 to 700, and a coated active material having a coating layer composed of the active material coating resin composition on at least a part of the surface of the active material.

Lithium ion batteries have become widely used in various applications, and used, for example, under a high temperature environment.

When lithium ion batteries using conventional coated active materials are used under a high temperature environment, there are problems that a side reaction occurs between the electrolytic solution and the coated active material, and the lithium ion battery deteriorates (specifically, the internal resistance value increases), and there is room for improvement.

Hereinafter, there will be disclosed a coated negative electrode active material particles for lithium ion batteries in which, even if it is used under a high temperature environment, it is possible to inhibit a side reaction that occurs between the electrolytic solution and the coated negative electrode active material particles and it is possible to prevent the internal resistance value of the lithium ion battery from increasing. In addition, a negative electrode for lithium ion batteries including the coated negative electrode active material particles for lithium ion batteries and a method for producing the coated negative electrode active material particles for lithium ion batteries will be disclosed.

The inventors found that, when a coating layer containing a polymer compound, a conductive assistant and ceramic particles is formed on the surface of negative electrode active material particles, it is possible to inhibit a side reaction that occurs between the electrolytic solution and the coated negative electrode active material particles and it is possible to prevent the internal resistance value of the lithium ion battery from increasing.

That is, the coated negative electrode active material particles for lithium ion batteries disclosed below are coated negative electrode active material particles for lithium ion batteries in which at least a part of the surface of negative electrode active material particles is covered with a coating layer, and the coating layer contains a polymer compound, a conductive assistant and ceramic particles in the coated negative electrode active material particles for lithium ion batteries.

In addition, there are disclosed a negative electrode for lithium ion batteries, which is a negative electrode for lithium ion batteries including the coated negative electrode active material particles for lithium ion batteries, wherein the weight proportion of the polymer compound contained in the negative electrode for lithium ion batteries based on the weight of the negative electrode for lithium ion batteries is 1 to 10 wt%; a negative electrode for lithium ion batteries which is a negative electrode for lithium ion batteries having a negative electrode active material layer containing the coated negative electrode active material particles for lithium ion batteries and an electrolytic solution containing an electrolyte and a solvent, wherein the negative electrode active material layer is formed of a non-bound component of the coated negative electrode active material particles for lithium ion batteries; and a method for producing coated negative electrode active material particles for lithium ion batteries including a process in which negative electrode active material particles, a polymer compound, a conductive assistant, ceramic particles and an organic solvent are mixed and the solvent is then removed.

The coated negative electrode active material particles for lithium ion batteries disclosed below are coated negative electrode active material particles for lithium ion batteries that can inhibit a side reaction that occurs between the electrolytic solution and the coated negative electrode active material particles and prevent the internal resistance value of the lithium ion battery from increasing.

[Coated Negative Electrode Active Material Particles for Lithium Ion Batteries]

The coated negative electrode active material particles for lithium ion batteries disclosed below (hereinafter simply referred to as "coated negative electrode active material particles") are coated negative electrode active material particles in which at least a part of the surface of negative electrode active material particles is covered with a coating layer, and the coating layer contains a polymer compound, a conductive assistant and ceramic particles.

In the coated negative electrode active material particles, when the coating layer contains a polymer compound, a conductive assistant and ceramic particles, it is possible to inhibit a side reaction that occurs between the electrolytic solution and the coated negative electrode active material particles and it is possible to prevent the internal resistance value of the lithium ion battery from increasing.

Examples of negative electrode active material particles include carbonaceous materials [graphite, non-graphitizable carbon, amorphous carbon, burned resin components (for example, those obtained by burning and carbonizing a phenolic resin, a furan resin or the like, etc.), cokes (for example, pitch coke, needle coke, petroleum coke, etc.), carbon fibers and the like], silicon material [silicon, silicon oxide (SiOx), silicon-carbon composites (those obtained by covering the surface of carbon particles with silicon and/or silicon carbide, those obtained by covering the surface of silicon particles or silicon oxide particles with carbon and/or silicon carbide, and silicon carbide, etc.), silicon alloys (silicon-aluminum alloys, silicon-lithium alloys, silicon-nickel alloys, silicon-iron alloys, silicon-titanium alloys, silicon-manganese alloys, silicon-copper alloys, silicon-tin alloys, etc.) or the like], conductive polymers (for example, polyacetylene, polypyrrole, etc.), metals (tin, aluminum, zirconium, titanium, etc.), metal oxides (titanium oxides, lithium/titanium oxides, etc.) and metal alloys (for example, lithium-tin alloys, lithium-aluminum alloys, lithium-aluminum-manganese alloys, etc.) and mixtures of these components and carbonaceous materials.

Among the negative electrode active material particles, those that do not contain lithium or lithium ions may be subjected to a pre-doping treatment in which lithium or lithium ions are incorporated into some or all of the negative electrode active material particles in advance.

In consideration of electrical characteristics of the battery, the volume average particle size of the negative electrode active material particles is preferably 0.01 to 100 um, more preferably 0.1 to 60 um, and still more preferably 2 to 40 um.

Here, in this specification, the volume average particle size is a particle size (Dv50) at a cumulative value of 50% in the particle size distribution obtained by a microtrack method (laser diffraction/scattering method). The microtrack method is a method of obtaining a particle size distribution using scattered light obtained by emitting a laser beam to particles. Here, the volume average particle size can be measured using Microtrac (commercially available from Nikkiso Co., Ltd.) or the like.

The coating layer contains a polymer compound, a conductive assistant and ceramic particles.

The polymer compound is preferably, for example, a resin containing a polymer including an acrylic monomer (a) as an essential constituent monomer.

Specifically, the polymer compound constituting the coating layer is preferably a polymer of a monomer composition containing an acrylic acid (a0) as an acrylic monomer (a). In the monomer composition, in consideration of flexibility of the coating layer, the content of the acrylic acid (a0) based on the weight of all monomers is preferably 90 wt% or more and 95 wt% or less.

The polymer compound constituting the coating layer may contain, as the acrylic monomer (a), a monomer (a1) having a carboxyl group or anhydride group other than the acrylic acid (a0).

Examples of monomers (a1) having a carboxyl group or anhydride group other than the acrylic acid (a0) include monocarboxylic acids having 3 to 15 carbon atoms such as methacrylic acid, crotonic acid, and cinnamic acid; dicarboxylic acids having 4 to 24 carbon atoms such as (anhydrous) maleic acid, fumaric acid, (anhydrous) itaconic acid, citraconic acid, and mesaconic acid; and trivalent to tetravalent or higher valency polycarboxylic acids having 6 to 24 carbon atoms such as aconitic acid.

The polymer compound constituting the coating layer may contain, as the acrylic monomer (a), a monomer (a2) represented by the following General Formula (1).

$$CH_2=C(R^1)COOR^2 \qquad (1)$$

[in Formula (1), $R^1$ is a hydrogen atom or a methyl group, and $R^2$ is a linear alkyl group having 4 to 12 carbon atoms or a branched alkyl group having 3 to 36 carbon atoms]

In the monomer (a2) represented by General Formula (1), $R^1$ represents a hydrogen atom or a methyl group. $R^1$ is preferably a methyl group.

$R^2$ is preferably a linear or branched alkyl group having 4 to 12 carbon atoms or a branched alkyl group having 13 to 36 carbon atoms.

(a21) an ester compound in which $R^2$ is a linear or branched alkyl group having 4 to 12 carbon atoms

Examples of linear alkyl groups having 4 to 12 carbon atoms include a butyl group, pentyl group, hexyl group, heptyl group, octyl group, nonyl group, decyl group, undecyl group, and dodecyl group.

Examples of branched alkyl groups having 4 to 12 carbon atoms include a 1-methylpropyl group (sec-butyl group), 2-methylpropyl group, 1,1-dimethylethyl group (tert-butyl group), 1-methylbutyl group, 1,1-dimethylpropyl group, 1,2-dimethylpropyl group, 2,2-dimethylpropyl group (neopentyl group), 1-methylpentyl group, 2-methylpentyl group, 3-methylpentyl group, 4-methylpentyl group, 1,1-dimethylbutyl group, 1,2-dimethylbutyl group, 1,3-dimethylbutyl group, 2,2-dimethylbutyl group, 2,3-dimethylbutyl group, 1-ethylbutyl group, 2-ethylbutyl group, 1-methylhexyl group, 2-methylhexyl group, 2-methylhexyl group, 4-methylhexyl group, 5-methylhexyl group, 1-ethylpentyl group, 2-ethylpentyl group, 3-ethylpentyl group, 1,1-dimethylpentyl group, 1,2-dimethylpentyl group, 1,3-dimethylpentyl group, 2,2-dimethylpentyl group, 2,3-dimethylpentyl group, 2-ethylpentyl group, 1-methylheptyl group, 2-methylheptyl group, 3-methylheptyl group, 4-methylheptyl group, 5-methylheptyl group, 6-methylheptyl group, 1,1-dimethylhexyl group, 1,2-dimethylhexyl group, 1,3-dimethylhexyl group, 1,4-dimethylhexyl group, 1,5-dimethylhexyl group, 1-ethylhexyl group, 2-ethylhexyl group, 1-methyloctyl group, 2-methyloctyl group, 3-methyloctyl group, 4-methyloctyl group, 5-methyloctyl group, 6-methyloctyl group, 7-methyloctyl group, 1,1-dimethylheptyl group, 1,2-dimethylheptyl group, 1,3-dimethylheptyl group, 1,4-dimethylheptyl group, 1,5-dimethylheptyl group, 1,6-dimethylheptyl group, 1-ethylheptyl group, 2-ethylheptyl group, 1-methylnonyl group, 2-methylnonyl group, 3-methylnonyl group, 4-methylnonyl group, 5-methylnonyl group, 6-methylnonyl group, 7-methylnonyl group, 8-methylnonyl group, 1,1-dimethyloctyl group, 1,2-dimethyloctyl group, 1,3-dimethyloctyl group, 1,4-dimethyloctyl group, 1,5-dimethyloctyl group, 1,6-dimethyloctyl group, 1,7-dimethyloctyl group, 1-ethyloctyl group, 2-ethyloctyl group, 1-methyldecyl group, 2-methyldecyl group, 3-methyldecyl group, 4-methyldecyl group, 5-methyldecyl group, 6-methyldecyl group, 7-methyldecyl group, 8-methyldecyl group, 9-methyldecyl group, 1,1-dimethylnonyl group, 1,2-dimethylnonyl group, 1,3-dimethylnonyl group, 1,4-dimethylnonyl group, 1,5-dimethylnonyl group, 1,6-dimethylnonyl group, 1,7-dimethylnonyl group, 1,8-dimethylnonyl group, 1-ethylnonyl group, 2-ethylnonyl group, 1-methylundecyl group, 2-methylundecyl group, 3-methylundecyl group, 4-methylundecyl group, 5-methylundecyl group, 6-methylundecyl group, 7-methylundecyl group, 8-methylundecyl group, 9-methylundecyl group, 10-methylundecyl group, 1,1-dimethyldecyl group, 1,2-dimethyldecyl group, 1,3-dimethyldecyl group, 1,4-dimethyldecyl group, 1,5-dimethyldecyl group, 1,6-dimethyldecyl group, 1,7-dimethyldecyl group, 1,8-dimethyldecyl group, 1,9-dimethyldecyl group, 1-ethyldecyl group, and 2-ethyldecyl group. Among these, a 2-ethylhexyl group is particularly preferable.

(a22) ester compound in which $R^2$ is a branched alkyl group having 13 to 36 carbon atoms

Examples of branched alkyl groups having 13 to 36 carbon atoms include 1-alkylalkyl groups [1-methyldodecyl group, 1-butyleicosyl group, 1-hexyloctadecyl group, 1-octylhexadecyl group, 1-decyltetradecyl group, 1-undecyltridecyl group, etc.], 2-alkylalkyl groups [2-methyldodecyl group, 2-hexyloctadecyl group, 2-octylhexadecyl group, 2-decyltetradecyl group, 2-undecyltridecyl group, 2-dodecylhexadecyl group, 2-tridecylpentadecyl group, 2-decyloctadecyl group, 2-tetradecyloctadecyl group, 2-hexadecyloctadecyl group, 2-tetradecyleicosyl group, 2-hexadecyleicosyl group, etc.], 3 to 34-alkylalkyl groups (3-alkylalkyl group, 4-alkylalkyl group, 5-alkylalkyl group, 32-alkylalkyl group, 33-alkylalkyl group, 34-alkylalkyl group, etc.), and mixed alkyl groups containing one or more branched alkyl groups such as residues of oxo alcohols obtained from propylene oligomers (heptamer to undecamer), ethylene/propylene (molar ratio of 16/1 to 1/11) oligomers, isobutylene oligomers (heptamer to octamer) and $\alpha$-olefin (with 5 to 20 carbon atoms) oligomers (tetramer to octamer) excluding hydroxyl groups.

The polymer compound constituting the coating layer may contain, as the acrylic monomer (a), an ester compound (a3) of a monohydric fatty alcohol having 1 to 3 carbon atoms and (meth)acrylic acid.

Examples of monohydric fatty alcohols having 1 to 3 carbon atoms constituting the ester compound (a3) include methanol, ethanol, 1-propanol and 2-propanol.

Here, (meth)acrylic acid refers to acrylic acid or methacrylic acid.

The polymer compound constituting the coating layer is preferably a polymer of a monomer composition containing an acrylic acid (a0) and at least one of a monomer (a1), a monomer (a2) and an ester compound (a3), more preferably a polymer of a monomer composition containing an acrylic acid (a0) and at least one of a monomer (a1), an ester compound (a21) and an ester compound (a3), still more preferably a polymer of a monomer composition containing an acrylic acid (a0), and any one of a monomer (a1), a monomer (a2) and an ester compound (a3), and most preferably a polymer of a monomer composition containing an acrylic acid (a0), and any one of a monomer (a1), an ester compound (a21) and an ester compound (a3).

Examples of the polymer compound constituting the coating layer include copolymers of acrylic acid and maleic acid using maleic acid as the monomer (a1), copolymers of acrylic acid and 2-ethylhexyl methacrylate using 2-ethylhexyl methacrylate as the monomer (a2), and copolymers of acrylic acid and methyl methacrylate using methyl methacrylate as the ester compound (a3) .

In order to reduce the volume change of the negative electrode active material particles, the total content of the monomer (a1), the monomer (a2) and the ester compound (a3) based on the weight of all monomers is preferably 2.0 to 9.9 wt% and more preferably 2.5 to 7.0 wt%.

The polymer compound constituting the coating layer preferably does not contain, as the acrylic monomer (a), an anionic monomer salt (a4) having a polymerizable unsaturated double bond and an anionic group.

Examples of structures having a polymerizable unsaturated double bond include a vinyl group, allyl group, styrenyl group and (meth)acryloyl group.

Examples of anionic groups include a sulfonic acid group and carboxyl group.

An anionic monomer having a polymerizable unsaturated double bond and an anionic group is a compound obtained by combining these, and examples thereof include vinylsulfonic acid, allylsulfonic acid, styrenesulfonic acid and (meth)acrylic acid.

Here, the (meth)acryloyl group refers to an acryloyl group or methacryloyl group.

Examples of cations constituting the anionic monomer salt (a4) include lithium ions, sodium ions, potassium ions and ammonium ions.

In addition, the polymer compound constituting the coating layer may contain, as the acrylic monomer (a), a radically polymerizable monomer (a5) that can be copolymerized with the acrylic acid (a0), the monomer (a1), the monomer (a2) and the ester compound (a3) as long as physical properties are not impaired.

The radically polymerizable monomer (a5) is preferably a monomer containing no active hydrogen, and the following monomers (a51) to (a58) can be used.

(a51) hydrocarbyl(meth)acrylates formed from linear aliphatic monools having 13 to 20 carbon atoms, alicyclic monools having 5 to 20 carbon atoms or aliphatic-aromatic monools having 7 to 20 carbon atoms and (meth)acrylic acid

Examples of monools include (i) linear aliphatic monools (tridecyl alcohol, myristyl alcohol, pentadecyl alcohol, cetyl alcohol, heptadecyl alcohol, stearyl alcohol, nonadecyl alcohol, arachidyl alcohol, etc.), (ii) alicyclic monools (cyclopentyl alcohol, cyclohexyl alcohol, cycloheptyl alcohol, cyclooctyl alcohol, etc.), (iii) aliphatic-aromatic monools (benzyl alcohol, etc.) and mixtures of two or more thereof.

(a52) poly (n=2 to 30) oxyalkylene (with 2 to 4 carbon atoms) alkyl (with 1 to 18 carbon atoms) ether(meth)acrylates [ethylene oxides of methanol (hereinafter abbreviated as EO) 10-mol adduct (meth)acrylate, propylene oxides of methanol (hereinafter abbreviated as PO) 10-mol adduct (meth)acrylate, etc.]

(a53) Nitrogen-containing vinyl compound

(a53-1) amide group-containing vinyl compound

(i) (meth)acrylamide compounds having 3 to 30 carbon atoms, for example, N,N-dialkyl (with 1 to 6 carbon atoms) or diaralkyl (with 7 to 15 carbon atoms) (meth)acrylamide (N,N-dimethylacrylamide, N,N-dibenzylacrylamide, etc.), diacetone acrylamide

(ii) amide group-containing vinyl compounds having 4 to 20 carbon atoms, excluding the above (meth)acrylamide compounds, for example, N-methyl-N-vinylacetamide, cyclic amides [pyrrolidone compounds (with 6 to 13 carbon atoms, for example, N-vinylpyrrolidone, etc.)]

(a53-2) (meth)acrylate compound

(i) dialkyl (with 1 to 4 carbon atoms) aminoalkyl (with 1 to 4 carbon atoms) (meth)acrylates [N,N-dimethylaminoethyl(meth)acrylate, N,N-diethylaminoethyl(meth)acrylate, t-butylaminoethyl(meth)acrylate, morpholinoethyl(meth)acrylate, etc.]

(ii) quaternary ammonium group-containing (meth)acrylate {quaternary compounds of tertiary amino group-containing (meth)acrylates [N,N-dimethylaminoethyl(meth)acrylate, N,N-diethylaminoethyl(meth)acrylate, etc.] (those quaternized using a quaternizing agent such as methyl chloride, dimethyl sulfate, benzyl chloride, dimethyl carbonate or the like) and the like}

(a53-3) heterocycle-containing vinyl compound pyridine compounds (with 7 to 14 carbon atoms, for example, 2- or 4-vinylpyridine), imidazole compounds (with 5 to 12 carbon atoms, for example, N-vinylimidazole), pyrrole compounds (with 6 to 13 carbon atoms, for example, N-vinylpyrrole), and pyrrolidone compounds (with 6 to 13 carbon atoms, for example, N-vinyl-2-pyrrolidone)

(a53-4) nitrile group-containing vinyl compound nitrile group-containing vinyl compounds having 3 to 15 carbon atoms, for example, (meth)acrylonitrile, cyanostyrene, cyanoalkyl (with 1 to 4 carbon atoms) acrylate

(a53-5) other nitrogen-containing vinyl compounds nitro group-containing vinyl compounds (with 8 to 16 carbon atoms, for example, nitrostyrene) and the like

(a54) vinyl hydrocarbon

(a54-1) aliphatic vinyl hydrocarbon

olefins having 2 to 18 or more carbon atoms (ethylene, propylene, butene, isobutylene, pentene, heptene, diisobutylene, octene, dodecene, octadecene, etc.), dienes having 4 to 10 or more carbon atoms (butadiene, isoprene, 1,4-pentadiene, 1,5-hexadiene, 1,7-octadiene, etc.), and the like

(a54-2) alicyclic vinyl hydrocarbon cyclic unsaturated compounds having 4 to 18 or more carbon atoms, for example, cycloalkane (for example, cyclohexene), (di)cycloalkadiene [for example, (di)cyclopentadiene], terpene (for example, pinene and limonene), and indene

(a54-3) aromatic vinyl hydrocarbon aromatic unsaturated compounds having 8 to 20 or more carbon atoms, for example, styrene, $\alpha$-methylstyrene, vinyltoluene, 2,4-dimethylstyrene, ethylstyrene, isopropylstyrene, butylstyrene, phenylstyrene, cyclohexylstyrene, and benzylstyrene

(a55) vinyl ester

aliphatic vinyl esters [with 4 to 15 carbon atoms, for example, alkenyl esters of aliphatic carboxylic acids (mono- or dicarboxylic acid) (for example, vinyl acetate, vinyl propionate, vinyl butyrate, diallyl adipate, isopropenyl acetate, and vinyl methoxy acetate)]

aromatic vinyl esters [with 9 to 20 carbon atoms, for example, alkenyl esters of aromatic carboxylic acids (mono- or dicarboxylic acid) (for example, vinyl benzoate, diallyl phthalate, methyl-4-vinyl benzoate), and aromatic ring-containing esters of aliphatic carboxylic acids (for example, acetoxystyrene)]

(a56) vinyl ether

aliphatic vinyl ethers [with 3 to 15 carbon atoms, for example, vinyl alkyl (with 1 to 10 carbon atoms) ethers (vinyl methyl ether, vinyl butyl ether, vinyl 2-ethylhexyl ether, etc.), vinyl alkoxy (with 1 to 6 carbon atoms) alkyl (with 1 to 4 carbon atoms) ethers (vinyl-2-methoxyethyl ether, methoxybutadiene, 3,4-dihydro-1,2-pyran, 2-butoxy-2'-vinyloxydiethyl ether, vinyl-2-ethylmercaptoethyl ether, etc.), poly (2 to 4)(meth)allyloxy alkane (with 2 to 6 carbon atoms) (diallyloxyethane, triallyloxyethane, tetraallyloxybutane, tetramethylallyloxyethane, etc.)], and aromatic vinyl ether (with 8 to 20 carbon atoms, for example, vinyl phenyl ether, and phenoxystyrene)

(a57) vinyl ketone

aliphatic vinyl ketones (with 4 to 25 carbon atoms, for example, vinyl methyl ketone, vinyl ethyl ketone), and aromatic vinyl ketones (with 9 to 21 carbon atoms, for example, vinyl phenyl ketone)

(a58) unsaturated dicarboxylic acid diester unsaturated dicarboxylic acid diester having 4 to 34 carbon atoms, for example, dialkyl fumarate (two alkyl groups are linear, branched or alicyclic groups having 1 to 22 carbon atoms), dialkyl maleate (two alkyl groups are linear, branched or alicyclic groups having 1 to 22 carbon atoms)

When the radically polymerizable monomer (a5) is contained, the content thereof based on the weight of all monomers is preferably 0.1 to 3.0 wt%.

A preferable lower limit of the weight-average molecular weight of the polymer compound constituting the coating layer is 3,000, a more preferable lower limit is 5,000, and a still more preferable lower limit is 7,000. On the other hand, a preferable upper limit of the weight-average molecular weight of the polymer compound is 100,000, and a more preferable upper limit is 70,000.

The weight-average molecular weight of the polymer compound constituting the coating layer can be obtained by gel permeation chromatography (hereinafter abbreviated as GPC) measurement under the following conditions.

Device: Alliance GPC V2000 (commercially available from Waters)
Solvent: ortho-dichlorobenzene, DMF, THF
Standard substance: polystyrene
Sample concentration: 3 mg/ml
Column stationary phase: PLgel 10 um, MIXED-B 2 columns in series (commercially available from Polymer Laboratories Ltd.) Column temperature: 135°C

The polymer compound constituting the coating layer can be produced using a known polymerization initiator {azo initiator [2,2'-azobis(2-methylpropionitrile), 2,2'-azobis(2,4-dimethylvaleronitrile), 2,2'-azobis(2-methylbutyronitrile), etc.], peroxide initiator (benzoyl peroxide, di-t-butyl peroxide, lauryl peroxide, etc.) or the like} by a known polymerization method (bulk polymerization, solution polymerization, emulsion polymerization, suspension polymerization, etc.).

In order to adjust the weight-average molecular weight to be within a preferable range, the amount of the polymerization initiator used based on the total weight of the monomers is preferably 0.01 to 5 wt%, more preferably 0.05 to 2 wt%, and still more preferably 0.1 to 1.5 wt%, and the polymerization temperature and the polymerization time are adjusted depending on the type of the polymerization initiator and the like, and polymerization is performed at a polymerization temperature of preferably -5 to 150°C, (more preferably 30 to 120°C) for a reaction time of preferably 0.1 to 50 hours (more preferably 2 to 24 hours) .

Examples of solvents used in the solution polymerization include esters (with 2 to 8 carbon atoms, for example, ethyl acetate and butyl acetate), alcohols (with 1 to 8 carbon atoms, for example, methanol, ethanol and octanol), hydrocarbons (with 4 to 8 carbon atoms, for example, n-butane, cyclohexane and toluene), amides (for example, N,N-dimethylformamide (hereafter abbreviated as DMF)) and ketones (with 3 to 9 carbon atoms, for example, methyl ethyl ketone), and in order to adjust the weight-average molecular weight to be within a preferable range, the amount thereof used based on the total weight of the monomers is preferably 5 to 900 wt%, more preferably 10 to 400 wt%, and still more preferably 30 to 300 wt%, and the monomer concentration is preferably 10 to 95 wt%, more preferably 20 to 90 wt%, and still more preferably 30 to 80 wt%.

Examples of dispersion media for emulsion polymerization and suspension polymerization include water, alcohols (for example, ethanol), esters (for example, ethyl propionate), and light naphtha, and examples of emulsifiers include (C10-C24) higher fatty acid metal salts (for example, sodium oleate and sodium stearate), (C10-C24) higher alcohol sulfate metal salts (for example, sodium lauryl sulfate), ethoxylated tetramethyldecynediol, sodium sulfoethyl methacrylate, and dimethylaminomethyl methacrylate. In addition, polyvinyl alcohol, polyvinylpyrrolidone or the like may be added as the stabilizer.

The monomer concentration of the solution or dispersion liquid is preferably 5 to 95 wt%, more preferably 10 to 90 wt%, and still more preferably 15 to 85 wt%, and the amount of the polymerization initiator used based on the total weight of the monomers is preferably 0.01 to 5 wt%, and more preferably 0.05 to 2 wt%.

During polymerization, a known chain transfer agent, for example, a mercapto compound (dodecyl mercaptan, n-butyl mercaptan, etc.) and/or a halogenated hydrocarbon (carbon tetrachloride, carbon tetrabromide, benzyl chloride, etc.), can be used.

The polymer compound constituting the coating layer may be a crosslinked polymer obtained by cross-linking the polymer compound with a cross-linking agent (A') having a reactive functional group that reacts with a carboxyl group {preferably a polyepoxy compound (a'1) [polyglycidyl ether (bisphenol A diglycidyl ether, propylene glycol diglycidyl ether, glycerin triglycidyl ether, etc.), polyglycidylamine (N,N-diglycidylaniline and 1,3-bis(N,N-diglycidylaminomethyl)) and the like ] and/or a polyol compound (a'2) (ethylene glycol, etc.)}.

Examples of methods of cross-linking a polymer compound constituting a coating layer using a cross-linking agent (A') include a method of coating negative electrode active material particles with a polymer compound constituting a coating layer and then performing cross-linking. Specifically, a method in which negative electrode active material particles and a resin solution containing a polymer compound constituting a coating layer are mixed, the solvent is removed to produce coated active material particles, and a solution containing the cross-linking agent (A') is then mixed with the coated active material particles and heated, and thus the solvent is removed, a cross-linking reaction is caused, and a reaction in which the polymer compound constituting the coating layer is cross-linked with the cross-linking agent (A') is caused on the surface of negative electrode active material particles may be exemplified.

The heating temperature is adjusted depending on the type of the cross-linking agent, and when the polyepoxy compound (a'1) is used as the cross-linking agent, the heating temperature is preferably 70°C or higher, and when the polyol compound (a'2) is used, the heating temperature is preferably 120°C or higher.

The conductive assistant is preferably selected from among materials having conductivity.

Examples of preferable conductive assistants include metals [aluminum, stainless steel (SUS), silver, gold, copper, titanium, etc.], carbon [graphite, carbon black (acetylene black, ketjen black, furnace black, channel black, thermal lamp black, etc.) and the like], and mixtures thereof.

These conductive assistants may be used alone or two or more thereof may be used in combination. In addition, alloys or metal oxides thereof may be used.

Among these, in consideration of electrical stability, aluminum, stainless steel, carbon, silver, gold, copper, titanium and mixtures thereof are more preferable, silver, gold, aluminum, stainless steel and carbon are still more preferable, and carbon is particularly preferable.

In addition, these conductive assistants may be those obtained by coating a conductive material [preferably, a metal assistant among the above conductive assistants] around a particulate ceramic material or a resin material by plating or the like.

The shape (form) of the conductive assistant is not limited to a particle form, and may be a form other than the particle form, and may be a form that is put into practical use as a so-called fiber-based conductive assistant such as carbon nanofibers and carbon nanotubes.

The average particle size of the conductive assistant is not particularly limited, and in consideration of electrical characteristics of the battery, it is preferably about 0.01 to 10 um.

The "particle size of the conductive assistant" is the maximum distance L among the distances between arbitrary two points on the outline of the conductive assistant. As the value of "average particle size", the value calculated as an average value of the particle sizes of the particles observed in several to several tens of fields of view using an observation device such as a scanning electron microscope (SEM) or a transmission electron microscope (TEM) is used.

The ratio between the polymer compound constituting the coating layer and the conductive assistant is not particularly limited, and in consideration of the internal resistance of the battery and the like, the weight ratio between the polymer compound constituting the coating layer (resin solid content weight):the conductive assistant is preferably 1:0.01 to 1:50 and more preferably 1:0.2 to 1:3.0.

Examples of ceramic particles include metal carbide particles, metal oxide particles, and glass ceramic particles.

Examples of metal carbide particles include silicon carbide $(SiC)$, tungsten carbide $(WC)$, molybdenum carbide $(MO_2C)$, titanium carbide $(TiC)$, tantalum carbide $(TaC)$, niobium carbide $(NbC)$, vanadium carbide $(VC)$, and zirconium carbide $(ZrC)$ .

Examples of metal oxide particles include particles of zinc oxide $(ZnO)$, aluminum oxide $(Al_2O_3)$, silicon dioxide $(SiO_2)$, tin oxide $(SnO_2)$, titania $(TiO_2)$, zirconia $(ZrO_2)$, indium oxide $(In_2O_3)$, $Li_2B_4O_7$, $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_3PO_4$, $Li_2MoO_4$, $Li_3BO_3$, $LiBO_2$, $Li_2CO_3$, $Li_2SiO_3$ and a perovskite oxide represented by $ABO_3$ (where, A is at least one selected from the group consisting of Ca, Sr, Ba, La, Pr and Y, and B is at least one selected from the group consisting of Ni, Ti, V, Cr, Mn, Fe, Co, Mo, Ru, Rh, Pd and Re).

In order to suitably inhibit a side reaction that occurs between the electrolytic solution and the coated negative electrode active material particles, as the metal oxide particles, zinc oxide $(ZnO)$, aluminum oxide $(Al_2O_3)$, silicon dioxide $(SiO_2)$ and lithium tetraborate $(Li_2B_4O_7)$ are preferable.

In order to suitably inhibit a side reaction that occurs between the electrolytic solution and the coated negative electrode active material particles, the ceramic particles are preferably glass ceramic particles.

These may be used alone or two or more thereof may be used in combination.

The glass ceramic particles are preferably a lithium-containing phosphate compound having a rhombohedral crystal system and a chemical formula thereof is represented by $Li_xM''_2P_3O_{12}$ (X=1 to 1.7).

Here, M" is one or more elements selected from the group consisting of Zr, Ti, Fe, Mn, Co, Cr, Ca, Mg, Sr, Y, Sc, Sn, La, Ge, Nb, and Al. In addition, some P may be replaced with Si or B, and some O may be replaced with F, Cl or the like. For example, $Li_{1.15}Ti_{1.85}Al_{0.15}Si_{0.05}P_{2.95}O_{12}$, $Li_{1.2}Ti_{1.8}Al_{0.1}Ge_{0.1}Si_{0.05}P_{2.95}O_{12}$ or the like can be used.

In addition, materials with different compositions may be mixed or combined, and the surface may be coated with a glass electrolyte or the like. Alternatively, it is preferable to use glass ceramic particles that precipitate a crystal phase of a lithium-containing phosphate compound having a NASICON type structure according to a heat treatment.

Examples of glass electrolytes include the glass electrolyte described in Japanese Patent Application Publication No. 2019-96478.

Here, the mixing proportion of $Li_2O$ in the glass ceramic particles is preferably 8 mass% or less in terms of oxide.

In addition to a NASICON type structure, a solid electrolyte which is composed of Li, La, Mg, Ca, Fe, Co, Cr, Mn, Ti, Zr, Sn, Y, Sc, P, Si, O, In, Nb, or F, has a LISICON type, perovskite type, $\beta$-$Fe_2(SO_4)_3$ type, or $Li_3In_2(PO_4)_3$ type crystal structure, and transmits $1 \times 10^{-5}$ S/cm or more of Li ions at room temperature may be used.

The above ceramic particles may be used alone or two or more thereof may be used in combination.

In consideration of the energy density and electrical resistance value, the volume average particle size of the ceramic particles is preferably 1 to 1,200 nm, more preferably 1 to 500 nm, and still more preferably 1 to 150 nm.

The weight proportion of the ceramic particles based on the weight of the coated negative electrode active material particles is preferably 0.5 to 5.0 wt%.

When ceramic particles are contained in the above range, it is possible to suitably inhibit a side reaction that occurs between the electrolytic solution and the coated negative electrode active material particles.

The weight proportion of the ceramic particles based on the weight of the coated negative electrode active material particles is more preferably 2.0 to 4.0 wt%.

At least a part of the surface of negative electrode active material particles is covered with a coating layer.

In consideration of cycle characteristics, the coverage (obtained by the following calculation formula) of the negative electrode active material particles is preferably 30 to 95%.

```
coverage (%)={1-[BET specific surface area of coated negative

electrode active material particles/(BET specific surface area

of negative electrode active material particles × weight

proportion of negative electrode active material particles

contained in coated negative electrode active material + BET

specific surface area of conductive assistant × weight

proportion of conductive assistant contained in coated

negative electrode active material particles + BET specific

surface area of ceramic particles × weight proportion of

ceramic particles contained in coated negative electrode

active material particles)]}×100
```

[Method for Producing Coated Negative Electrode Active Material Particles for Lithium Ion Batteries]

A method for producing coated negative electrode active material particles for lithium ion batteries disclosed below (hereinafter simply referred to as a "method for producing coated negative electrode active material particles") includes a process in which negative electrode active material particles, a polymer compound, a conductive assistant, ceramic particles and an organic solvent are mixed and the solvent is then removed.

The organic solvent is not particularly limited as long as it is an organic solvent that can dissolve a polymer compound, and a known organic solvent can be appropriately selected and used.

In the method for producing coated negative electrode active material particles, first, the negative electrode active material particles, the polymer compound constituting the coating layer, the conductive assistant and the ceramic particles are mixed in an organic solvent.

The order in which the negative electrode active material particles, the polymer compound constituting the coating layer, the conductive assistant and the ceramic particles are mixed is not particularly limited, and for example, a premixed resin composition including the polymer compound constituting the coating layer, the conductive assistant and the ceramic particles may be additionally mixed with the negative electrode active material particles, or the negative electrode active material particles, the polymer compound constituting the coating layer, the conductive assistant and the ceramic particles may be mixed at the same time, or the polymer compound constituting the coating layer may be mixed with the negative electrode active material particles and additionally, the conductive assistant and the ceramic particles may be mixed.

The above coated negative electrode active material particles can be obtained by covering negative electrode active material particles with a coating layer containing a polymer compound, a conductive assistant and ceramic particles, and for example, the particles can be obtained when, while the negative electrode active material particles are put into a universal mixer and stirred at 30 to 500 rpm, a resin solution containing the polymer compound constituting the coating layer is added dropwise over 1 to 90 minutes and mixed, the conductive assistant and the ceramic particles are mixed, the temperature is raised to 50 to 200°C with stirring, the pressure is reduced to 0.007 to 0.04 MPa, the sample is then left for 10 to 150 minutes, and the solvent is removed.

The mixing ratio of the negative electrode active material particles, and the resin composition containing the polymer compound constituting the coating layer, the conductive assistant and the ceramic particles is not particularly limited, and the weight ratio of the negative electrode active material particles:the resin composition is preferably 1:0.001 to 0.1.

[Negative Electrode for Lithium Ion Batteries]

A negative electrode for lithium ion batteries disclosed below (hereinafter simply referred to as a "negative electrode") has a negative electrode active material layer containing the above coated negative electrode active material particles and an electrolytic solution containing an electrolyte and a solvent.

The proportion of the coated negative electrode active material particles contained in the negative electrode active material layer based on the weight of the negative electrode active material layer is preferably 40 to 95 wt% and more preferably 60 to 90 wt% in consideration of dispersibility of the negative electrode active material particles and electrode moldability.

As the electrolyte, electrolytes used in known electrolytic solutions can be used, and for example, lithium salts of inorganic anions such as $LiPF_6$, $LiBF_4$, $LiSbF_6$, $LiAsF_6$, $LiClO_4$ and $LiN(FSO_2)_2$, and lithium salts of organic anions such as $LiN(CF_3SO_2)_2$, $LiN(C_2F_5SO_2)_2$ and $LiC(CF_3SO_2)_3$ may be exemplified. Among these, $LiN(FSO_2)_2$ is preferable in consideration of the battery output and charging and discharging cycle characteristics.

As the solvent, non-aqueous solvents used in known electrolytic solutions can be used, and for example, lactone compounds, cyclic or chain carbonates, chain carboxylates, cyclic or chain ethers, phosphate esters, nitrile compounds, amide compounds, sulfone, sulfolane and mixtures thereof can be used.

Examples of lactone compounds include 5-membered ring (γ-butyrolactone, γ-valerolactone, etc.) and 6-membered ring (δ-valerolactone, etc.) lactone compounds.

Examples of cyclic carbonates include propylene carbonate, ethylene carbonate (EC) and butylene carbonate (BC).

Examples of chain carbonates include dimethyl carbonate (DMC), methyl ethyl carbonate (MEC), diethyl carbonate (DEC), methyl-n-propyl carbonate, ethyl-n-propyl carbonate and di-n-propyl carbonate.

Examples of chain carboxylates include methyl acetate, ethyl acetate, propyl acetate and methyl propionate.

Examples of cyclic ethers include tetrahydrofuran, tetrahydropyran, 1,3-dioxolane and 1,4-dioxane. Examples of chain ethers include dimethoxymethane and 1,2-dimethoxyethane.

Examples of phosphate esters include trimethyl phosphate, triethyl phosphate, ethyldimethyl phosphate, diethylmethyl phosphate, tripropyl phosphate, tributyl phosphate, tri(trifluoromethyl) phosphate, tri(trichloromethyl) phosphate, tri(trifluoroethyl) phosphate, tri(triperfluoroethyl) phosphate, 2-ethoxy-1,3,2-dioxaphospholan-2-one, 2-trifluoroethoxy-1,3,2-dioxaphospholan-2-one and 2-methoxyethoxy-1,3,2-dioxaphospholan-2-one.

Examples of nitrile compounds include acetonitrile. Examples of amide compounds include DMF. Examples of sulfones include dimethyl sulfone and diethyl sulfone.

These solvents may be used alone or two or more thereof may be used in combination.

The concentration of the electrolyte in the electrolytic solution is preferably 1.2 to 5.0 mol/L, more preferably 1.5 to 4.5 mol/L, still more preferably 1.8 to 4.0 mol/L, and particularly preferably 2.0 to 3.5 mol/L.

Since such an electrolytic solution has an appropriate viscosity, it can form a liquid film between the coated negative electrode active material particles, and form a lubrication effect (an ability to adjust the position of coated active material particles) to the coated negative electrode active material particles.

The negative electrode active material layer may further contain a conductive assistant in addition to the conductive assistant that is contained as necessary in the coating layer of the above coated negative electrode active material particles. While the conductive assistant that is contained as necessary in the coating layer is integrated with the coated negative electrode active material particles, the conductive assistant contained in the negative electrode active material layer can be distinguished in that it is contained separately from the coated negative electrode active material particles.

As the conductive assistant that the negative electrode active material layer may contain, those described in [Coated negative electrode active material particles for lithium ion batteries] can be used.

When the negative electrode active material layer contains a conductive assistant, the total content of the conductive assistant contained in the negative electrode and the conductive assistant contained in the coating layer based on the weight of the negative electrode active material layer excluding the electrolytic solution is preferably less than 4 wt% and more preferably less than 3 wt%. On the other hand, the total content of the conductive assistant contained in the negative electrode and the conductive assistant contained in the coating layer based on the weight of the negative electrode active material layer excluding the electrolytic solution is preferably 2.5 wt% or more.

The negative electrode active material layer preferably does not contain a binder.

Here, the binder refers to an agent that cannot reversibly fix the negative electrode active material particles to each other and the negative electrode active material particles to the current collector, and known solvent-drying type binders for lithium ion batteries such as starch, polyvinylidene fluoride, polyvinyl alcohol, carboxymethyl cellulose, polyvinylpyrrolidone, tetrafluoroethylene, styrene-butadiene rubber, polyethylene and polypropylene may be exemplified.

These binders are used by being dissolved or dispersed in a solvent, and are solidified by volatilizing and distilling off the solvent to irreversibly fix the negative electrode active material particles to each other and the negative electrode active material particles to the current collector.

The negative electrode active material layer may contain an adhesive resin. The adhesive resin is a resin that does not solidify and has adhesiveness even if the solvent component is volatilized and dried, and is a material different and distinguished from the binder.

In addition, while the coating layer constituting the coated negative electrode active material particles is fixed to the surface of negative electrode active material particles, the adhesive resin reversibly fixes the surfaces of the negative electrode active material particles to each other. The adhesive resin can be easily separated from the surface of negative electrode active material particles, but the coating layer cannot be easily separated. Therefore, the coating layer and the adhesive resin are different materials.

As the adhesive resin, polymers which contain at least one low Tg monomer selected from the group consisting of vinyl acetate, 2-ethylhexyl acrylate, 2-ethylhexyl methacrylate, butyl acrylate and butyl methacrylate as an essential constituent monomer, and in which the total weight proportion of the low Tg monomers based on the total weight of the constituent monomers is 45 wt% or more may be exemplified.

When the adhesive resin is used, it is preferable to use 0.01 to 10 wt% of the adhesive resin based on the total weight of the negative electrode active material particles.

In a first aspect of the negative electrode for lithium ion batteries disclosed below, the weight proportion of the polymer compound contained in the negative electrode for lithium ion batteries based on the weight of the negative electrode for lithium ion batteries is 1 to 10 wt%.

Here, the "polymer compound" refers to a polymer compound constituting a coating layer, a binder and an adhesive resin, and in the negative electrode for lithium ion batteries, the total weight proportion of the polymer compound constituting the coating layer and the adhesive resin is equal to the above "weight proportion of the polymer compound" and contains no binder (0 wt%).

In a second aspect of the negative electrode for lithium ion batteries disclosed below, the negative electrode active material layer is formed of a non-bound component of the coated negative electrode active material particles for lithium ion batteries.

Here, it is called a non-bound component because the position of the negative electrode active material particles is not fixed in the negative electrode active material layer, and the negative electrode active material particles and the negative electrode active material particles and the current collector are not irreversibly fixed.

When the negative electrode active material layer is a non-bound component, this is preferable because, since the negative electrode active material particles are not irreversibly fixed to each other, it is possible to separate the negative electrode active material particles from each other without causing breakage at the interface, and even if stress is applied to the negative electrode active material layer, the movement of the negative electrode active material particles can prevent the negative electrode active material layer from being broken.

The negative electrode active material layer which is a non-bound component can be obtained by a method such as using a negative electrode active material layer slurry containing negative electrode active material particles, an electrolytic solution or the like and not containing a binder as the negative electrode active material layer.

In consideration of battery performance, the thickness of the negative electrode active material layer is preferably 150 to 600 um and more preferably 200 to 550 um.

The negative electrode for lithium ion batteries of the present invention can be produced, for example, by applying a negative electrode active material layer slurry containing the above coated negative electrode active material particles, an electrolytic solution containing an electrolyte and a solvent, as necessary, a conductive assistant and the like to a current collector and then drying it. Specifically, a method in which a negative electrode active material layer slurry is applied onto a current collector using a coating device such as a bar coater, the non-woven fabric is then left on the negative electrode active material particles to absorb a liquid, and thus the solvent is removed, and as necessary, pressing is performed with a press machine may be exemplified.

Examples of materials constituting the negative electrode current collector include metal materials such as copper, aluminum, titanium, stainless steel, nickel and alloys thereof, and calcined carbon, conductive polymer materials, and conductive glass.

The shape of the current collector is not particularly limited, and a sheet-like current collector made of the above material and a deposition layer including fine particles composed of the above material may be used.

The thickness of the current collector is not particularly limited, and is preferably 50 to 500 um.

It is preferable that the negative electrode for lithium ion batteries further include a current collector, and the negative electrode active material layer be provided on the surface of the current collector. For example, it is preferable that the negative electrode include a resin current collector made of a conductive polymer material, and the negative electrode active material layer be provided on the surface of the resin current collector.

As the conductive polymer material constituting the resin current collector, for example, those obtained by adding a conducting agent to a resin can be used.

As the conducting agent constituting the conductive polymer material, the same conductive assistant which is an optional component for the coating layer can be preferably used.

Examples of resins constituting the conductive polymer material include polyethylene (PE), polypropylene (PP), polymethylpentene (PMP), polycycloolefin (PCO), polyethylene terephthalate (PET), polyethernitrile (PEN), polytetrafluoroethylene (PTFE), styrene butadiene rubber (SBR), polyacrylonitrile (PAN), polymethyl acrylate (PMA), polymethyl methacrylate (PMMA), polyvinylidene fluoride (PVdF), epoxy resins, silicone resins and mixtures thereof.

In consideration of electrical stability, polyethylene (PE), polypropylene (PP), polymethylpentene (PMP) and polycycloolefin (PCO) are preferable, and polyethylene (PE), polypropylene (PP) and polymethylpentene (PMP) are more preferable.

The resin current collector can be obtained by known methods described in Japanese Patent Application Publication No. 2012-150905, WO 2015/005116 and the like.

[Lithium Ion Battery]

A lithium ion battery can be obtained by combining the above negative electrode with an electrode that serves as a counter electrode, housing it in a cell container together with a separator, injecting an electrolytic solution, and sealing the cell container.

In addition, a lithium ion battery can be obtained by forming the above negative electrode on one side of a current collector, forming a positive electrode on the other side to produce a bipolar type electrode, laminating the bipolar type electrode and a separator, housing it in a cell container, injecting an electrolytic solution, and sealing the cell container.

Examples of separators include known separators for lithium ion batteries such as polyethylene or polypropylene porous films, laminated films of a porous polyethylene film and a porous polypropylene, non-woven fabrics composed of synthetic fibers (polyester fibers, aramid fibers, etc.), glass fibers or the like, and those with ceramic fine particles such as silica, alumina, and titania adhered to their surfaces.

Next, an example of the above coated negative electrode active material particles for lithium ion batteries will be described in detail. Here, unless otherwise specified, parts means parts by weight, and % means wt%.

<Production of Coating Polymer Compound A>

150 parts of DMF was put into a 4-neck flask including a stirrer, a thermometer, a reflux cooling tube, a dropping funnel and a nitrogen gas inlet tube, and the temperature was raised to 75°C. Next, a monomer composition in which 91 parts of acrylic acid, 9 parts of methyl methacrylate and 50 parts of DMF were mixed and an initiator solution in which 0.3 parts of 2,2'-azobis(2,4-dimethylvaleronitrile) and 0.8 parts of 2,2'-azobis(2-methylbutyronitrile) were dissolved in 30 parts of DMF were continuously added dropwise over 2 hours through a dropping funnel with stirring while blowing nitrogen into the 4-neck flask to cause radical polymerization. After dropwise addition was completed, the reaction was continued at 75°C for 3 hours. Next, the temperature was raised to 80°C, the reaction was continued for 3 hours, and a copolymer solution having a resin concentration of 30% was obtained. The obtained copolymer solution was transferred to a Teflon (registered trademark) bat and dried under a reduced pressure at 150°C and 0.01 MPa for 3 hours, and DMF was distilled off to obtain a copolymer. This copolymer was coarsely pulverized with a hammer and then additionally pulverized with a mortar to obtain a powdered coating polymer compound A.

<Production of Electrolytic Solution>

An electrolytic solution was prepared by dissolving $LiN(FSO_2)_2$ at a proportion of 2.0 mol/L in a solvent mixture containing ethylene carbonate (EC) and propylene carbonate (PC) (volume ratio of 1:1).

<Example 7>

[Production of Coated Negative Electrode Active Material Particles A]

1 part of the coating polymer compound A was dissolved in 3 parts of DMF to obtain a coating polymer compound solution.

When 76 parts of the negative electrode active material particles (hard carbon powder, a volume average particle size of 25 um) were put into a Universal Mixer High Speed Mixer FS25 [commercially available from EARTHTECHNICA Co., Ltd.] and stirred at room temperature and 720 rpm, 9 parts of the coating polymer compound solution was added dropwise over 2 minutes and additionally stirred for 5 minutes.

Next, under stirring, 9 parts of acetylene black [Denka Black (registered trademark), commercially available from Denka Co., Ltd.] as a conductive assistant, 2 parts of carbon nanofibers [commercially available from Teijin Ltd.] and 4 parts of glass ceramic particles (product name "lithium ion conducting glass ceramic LICGC™ PW-01 (1 um)" [commercially available from Ohara Inc.], a volume average particle size of 1,000 nm) were added over 2 minutes in a divided manner, and stirring was continued for 30 minutes.

Then, the pressure was reduced to 0.01 MPa while stirring was maintained, the temperature was then raised to 140°C while stirring and the degree of pressure reduction were maintained, and volatile components were distilled off while stirring, the degree of pressure reduction and the temperature were maintained for 8 hours.

The obtained powder was classified with a sieve with an opening of 200 um to obtain coated negative electrode active material particles A.

[Production of Resin Current Collector]

70 parts of polypropylene [product name "SunAllomer PL500A", commercially available from SunAllomer Ltd.], 25 parts of carbon nanotubes [product name: "FloTube9000", commercially available from CNano] and 5 parts of a dispersing agent [product name "UMEX 1001", commercially available from Sanyo Chemical Industries, Ltd.] were melt-kneaded using a twin-screw extruder under conditions of 200°C and 200 rpm to obtain a resin mixture.

The obtained resin mixture was passed through a T-die extrusion film forming machine and stretched and rolled to obtain a conductive film for a resin current collector having a film thickness of 100 um. Next, the obtained conductive film for a resin current collector was cut into 17.0 cm × 17.0 cm, one side was subjected to nickel vapor deposition and a resin current collector to which a current extraction terminal (5 mm × 3 cm) was connected was then obtained.

[Production of Negative Electrode for Lithium Ion Batteries]

42 parts of an electrolytic solution, and 4.2 parts of carbon fibers [DONACARBO Milled S-243, commercially available from Osaka Gas Chemicals Co., Ltd.: an average fiber length of 500 um, an average fiber diameter of 13 um: an electrical conductivity of 200 mS/cm] were mixed using a planetary stirring type mixing and kneading device {Awatori Rentaro [commercially available from Thinky Corporation]} at 2,000 rpm for 5 minutes, and subsequently, 30 parts of the electrolytic solution and 206 parts of the coated negative electrode active material particles A were added, and then additionally mixed with Awatori Rentaro at 2,000 rpm for 2 minutes, 20 parts of the electrolytic solution was additionally added, and the mixture was then stirred with Awatori Rentaro at 2,000 rpm for 1 minute, 2.3 parts of the electrolytic solution was additionally added, and the mixture was then stirred with Awatori Rentaro at 2,000 rpm for 2 minutes and mixed to produce a negative electrode active material layer slurry. The obtained negative electrode active material layer slurry was applied to one side of the resin current collector so that the weight per unit area was 80 mg/cm$^2$ and pressed at a pressure of 1.4 MPa for about 10 seconds to produce a negative electrode for lithium ion batteries (16.2 cm × 16.2 cm) having a thickness of 340 um according to Example 7.

[Production of Lithium Ion Battery]

The obtained negative electrode was combined with a Li metal counter electrode via a separator (#3501, commercially available from Celgard LLC) to produce a laminate cell.

<Example 8>

[Production of Coated Negative Electrode Active Material Particles B]

Coated negative electrode active material particles B were obtained in the same manner as in Example 7 except that lithium tetraborate (product name "lithium tetraborate, anhydrous", [commercially available from FUJIFILM Wako Pure Chemical Corporation], a volume average particle size of 35.5 nm) was used in place of glass ceramic particles.

[Production of Lithium Ion Battery]

A negative electrode for lithium ion batteries was produced in the same manner as in Example 7 except that the coated negative electrode active material particles B were used in place of the coated negative electrode active material particles A, and thereby a lithium ion battery was obtained.

<Example 9>

[Production of Coated Negative Electrode Active Material Particles C]

Coated negative electrode active material particles C were obtained in the same manner as in Example 7 except that zinc oxide (item "ZnO", [commercially available from Kanto Chemical Co., Inc.], a volume average particle size of 65.4 nm) was used in place of glass ceramic particles.

[Production of Lithium Ion Battery]

A negative electrode for lithium ion batteries was produced in the same manner as in Example 7 except that the coated negative electrode active material particles C were used in place of the coated negative electrode active material particles A, and thereby a lithium ion battery was obtained.

<Example 10>

[Production of Coated Negative Electrode Active Material Particles D]

Coated negative electrode active material particles D were obtained in the same manner as in Example 7 except that aluminum oxide (item "Al$_2$O$_3$", [commercially available from Kanto Chemical Co., Inc.], a volume average particle size of 35.0 nm) was used in place of glass ceramic particles.

[Production of Lithium Ion Battery]

A negative electrode for lithium ion batteries was produced in the same manner as in Example 7 except that the coated negative electrode active material particles D were used in place of the coated negative electrode active material particles A and thereby a lithium ion battery was obtained.

<Example 11>

[Production of Coated Negative Electrode Active Material Particles E]

Coated negative electrode active material particles E were obtained in the same manner as in Example 7 except that silicon dioxide 1 (item "SiO$_2$", [commercially available from Kanto Chemical Co., Inc.], a volume average particle size of 51.2 nm) was used in place of glass ceramic particles.

[Production of Lithium Ion Battery]

A negative electrode for lithium ion batteries was produced in the same manner as in Example 7 except that the coated negative electrode active material particles E were used in place of the coated negative electrode active material particles A, and thereby a lithium ion battery was obtained.

<Example 12>

[Production of Coated Negative Electrode Active Material Particles F]

Coated negative electrode active material particles F were obtained in the same manner as in Example 7 except that silicon dioxide 2 (product name "AEROSIL 300", [commercially available from Toshin Chemicals Co., Ltd.], a volume average particle size of 7.0 nm) was used in place of glass ceramic particles.

[Production of Lithium Ion Battery]

A negative electrode for lithium ion batteries was produced in the same manner as in Example 7 except that the coated negative electrode active material particles F were used in place of the coated negative electrode active material particles A, and thereby a lithium ion battery was obtained.

<Comparative Example 6>

[Production of Coated Negative Electrode Active Material Particles G]

Coated negative electrode active material particles G were obtained in the same manner as in Example 7 except that no glass ceramic particles were added.

[Production of Lithium Ion Battery]

A negative electrode for lithium ion batteries was produced in the same manner as in Example 7 except that the coated negative electrode active material particles G were used in place of the coated negative electrode active material particles A, and thereby a lithium ion battery was obtained.
Table 7 shows the type of ceramic particles used in Examples 7 to 12 and Comparative Example 6, the volume average particle size, and the addition amount based on the weight of the coated negative electrode active material particles, and the weight proportion of the coating resin in the negative electrode for lithium ion batteries.
Here, the volume average particle size was measured by the method described in this specification.
That is, the volume average particle size is a particle size (Dv50) at a cumulative value of 50% in the particle size distribution obtained by a microtrack method (laser diffraction/scattering method).

| | Coated negative electrode active material particles | | | Negative electrode for lithium ion batteries |
|---|---|---|---|---|
| | Type of ceramic particles | Volume average particle size (nm) | Addition amount based on weight of coated negative electrode active material particles (wt%) | Weight proportion of coating resin in negative electrode for lithium ion batteries (wt%) |
| Example 7 | Glass ceramic particles | 1000.0 | 4.3 | 1.6 |
| Example 8 | Lithium tetraborate | 35.5 | 4.3 | 1.6 |
| Example 9 | Zinc oxide | 65.4 | 4.3 | 1.6 |
| Example 10 | Aluminum oxide | 35.0 | 4.3 | 1.6 |
| Example 11 | Silicon dioxide 1 | 51.2 | 4.3 | 1.6 |
| Example 12 | Silicon dioxide 2 | 7.0 | 4.3 | 1.6 |
| Comparative Example 6 | No addition | | | 1.7 |

<Measurement of Internal Resistance Value>

The lithium ion batteries obtained in Examples 7 to 12 and Comparative Example 6 were charged at a constant current of 0.05C to a voltage of 4.2 V and then charged at a constant voltage of 4.2 V until the current value reached 0.01C using a charge and discharge measuring device "battery analyzer model 1470" [commercially available from Toyo Corporation] at 25°C. After resting for 10 minutes, the lithium ion batteries were discharged at a constant current of 0.01C to a voltage of 2.5 V and charged at a constant current of 0.05C to a voltage of 4.2 V. Next, the charged lithium ion battery was stored under an environment of 60°C.

Using an impedance measuring device (chemical impedance analyzer IM3590, commercially available from HIOKI E.E. Corporation), after 0 days (immediately after full charge), after storage for 7 days and after storage for 14 days, the internal resistance value at a frequency of 1,000 Hz was measured.

The results are shown in Table 8 and Fig. 1.

[Table 8]

| | Internal resistance value ($\Omega$) | | | Difference in internal resistance value between after 0 days and after storage for 14 days ($\Omega$) |
|---|---|---|---|---|
| | Storage days (day) | | | |
| | 0 | 7 | 14 | |
| Example 7 | 2.98 | 3.34 | 3.52 | 0.54 |
| Example 8 | 3.37 | 3.55 | 3.65 | 0.28 |
| Example 9 | 3.30 | 3.45 | 3.88 | 0.58 |
| Example 10 | 3.15 | 3.28 | 3.51 | 0.36 |
| Example 11 | 3.15 | 3.38 | 3.63 | 0.48 |
| Example 12 | 3.21 | 3.46 | 3.62 | 0.41 |
| Comparative Example 6 | 3.40 | 21.50 | 37.80 | 34.40 |

Based on Table 8 and Fig. 1, it was confirmed that, in Examples 7 to 12, it was possible to prevent the internal resistance value of the lithium ion battery from increasing even after 14 days.

Here, this specification describes the following technical idea described in the basic application of the present international application. (1-1) Coated negative electrode active material particles for lithium ion batteries in which at least a part of the surface of negative electrode active material particles is covered with a coating layer containing a polymer compound and a compound (A),

wherein the polymer compound is a polymer including (meth)acrylic acid as a constituent monomer, and the weight proportion of (meth)acrylic acid in the polymer based on the weight of the polymer is 70 to 95 wt%, and

wherein the compound (A) is at least one selected from the group consisting of tetrahydrothiophene 1,1-dioxide, ethylene carbonate and vinylene carbonate. (1-2) The coated negative electrode active material particles for lithium ion batteries according to (1-1),

wherein the weight proportion of the polymer compound contained in the coated negative electrode active material particles for lithium ion batteries based on the weight of the coated negative electrode active material particles for lithium ion batteries is 1 to 7 wt%, and

wherein the weight proportion of the compound (A) contained in the coated negative electrode active material particles for lithium ion batteries based on the weight of the coated negative electrode active material particles for lithium ion batteries is 0.5 to 14 wt%. (1-3) The coated negative electrode active material particles for lithium ion batteries according to (1-1) or (1-2),

wherein the polymer compound is a polymer including a vinyl monomer (b) as a constituent monomer, and includes, as the vinyl monomer (b), a vinyl monomer (b1) represented by the following General Formula (1):

$$CH_2=C(R^1)COOR^2 \qquad (1)$$

[in General Formula (1), $R^1$ is a hydrogen atom or a methyl group and $R^2$ is an alkyl group having 1 to 12 carbon atoms]

(1-4) A negative electrode for lithium ion batteries including the coated negative electrode active material particles according to any one of (1-1) to (1-3).

(1-5) A lithium ion battery including the negative electrode for lithium ion batteries according to (1-4).

(1-6) A method for producing coated negative electrode active material particles for lithium ion batteries, including:

a mixing process in which a solution in which a polymer compound and a compound (A) are dissolved in an organic solvent and negative electrode active material particles are mixed; and

a distillation process in which the organic solvent is distilled off after the mixing process,

wherein the polymer compound is a polymer including (meth)acrylic acid as a constituent monomer, and the weight proportion of (meth)acrylic acid in the polymer based on the weight of the polymer is 70 to 95 wt%, and

wherein the compound (A) is at least one selected from the group consisting of tetrahydrothiophene 1,1-dioxide, ethylene carbonate and vinylene carbonate.

(2-1) Coated negative electrode active material particles for lithium ion batteries in which at least a part of the surface of negative electrode active material particles is covered with a coating layer,

wherein the coating layer contains a polymer compound, a conductive assistant and ceramic particles.

(2-2) The coated negative electrode active material particles for lithium ion batteries according to (2-1), wherein the volume average particle size of the ceramic particles is 1 to 1,200 nm.

(2-3) The coated negative electrode active material particles for lithium ion batteries according to (2-1) or (2-2), wherein the weight proportion of the ceramic particles based on the weight of the coated negative electrode active material particles is 0.5 to 5.0 wt%.

(2-4) A negative electrode for lithium ion batteries having a negative electrode active material layer containing the coated negative electrode active material particles for lithium ion batteries according to any one of (2-1) to (2-3), and an electrolytic solution containing an electrolyte and a solvent, wherein the weight proportion of a polymer compound contained in the negative electrode for lithium ion batteries based on the weight of the negative electrode for lithium ion batteries is 1 to 10 wt%.

(2-5) A negative electrode for lithium ion batteries having a negative electrode active material layer containing the coated negative electrode active material particles for lithium ion batteries according to any one of (2-1) to (2-3), and an electrolytic solution containing an electrolyte and a solvent, wherein the negative electrode active material layer is formed of a non-bound component of the coated negative electrode active material particles for lithium ion batteries.

(2-6) A method for producing the coated negative electrode active material particles for lithium ion batteries according to any one of (2-1) to (2-3) including a process in which negative electrode active material particles, a polymer compound, a conductive assistant, ceramic particles and an organic solvent are mixed and the solvent is then removed.

[Industrial Applicability]

Lithium ion batteries using the coated negative electrode active material particles for lithium ion batteries of the present invention are particularly useful as lithium ion batteries used for mobile phones, personal computers, hybrid vehicles, and electric vehicles.

**Claims**

1. Coated negative electrode active material particles for lithium ion batteries in which at least a part of the surface of negative electrode active material particles is covered with a coating layer containing a polymer compound and a compound (A),

   wherein the polymer compound is a polymer including (meth)acrylic acid as a constituent monomer, and the weight proportion of (meth)acrylic acid in the polymer based on the weight of the polymer is 70 to 95 wt%, and

   wherein the compound (A) is at least one selected from the group consisting of tetrahydrothiophene 1,1-dioxide, ethylene carbonate and vinylene carbonate.

2. The coated negative electrode active material particles for lithium ion batteries according to claim 1,

   wherein the weight proportion of the polymer compound contained in the coated negative electrode active material particles for lithium ion batteries based on the weight of the coated negative electrode active material particles for lithium ion batteries is 1 to 7 wt%, and

   wherein the weight proportion of the compound (A) contained in the coated negative electrode active material particles for lithium ion batteries based on the weight of the coated negative electrode active material particles for lithium ion batteries is 0.5 to 14 wt%.

3. The coated negative electrode active material particles for lithium ion batteries according to claim 1 or 2, wherein the polymer compound is a polymer including a vinyl monomer (b) as a constituent monomer, and includes, as the vinyl monomer (b), a vinyl monomer (b1) represented by the following General Formula (1):

$$CH_2=C(R^1)COOR^2 \qquad (1)$$

[in General Formula (1), $R^1$ is a hydrogen atom or a methyl group and $R^2$ is an alkyl group having 1 to 12 carbon atoms]

4. The coated negative electrode active material particles for lithium ion batteries according to any one of claims 1 to 3, wherein the coating layer further includes a conductive assistant and ceramic particles.

5. The coated negative electrode active material particles for lithium ion batteries according to claim 4, wherein the volume average particle size of the ceramic particles is 1 to 1,200 nm.

6. The coated negative electrode active material particles for lithium ion batteries according to claim 4 or 5, wherein the weight proportion of the ceramic particles based on the weight of the coated negative electrode active material particles is 0.5 to 5.0 wt%.

7. A negative electrode for lithium ion batteries comprising the coated negative electrode active material particles according to any one of claims 1 to 6.

8. The negative electrode for lithium ion batteries according to claim 7, having a negative electrode active material layer containing the coated negative electrode active material particles according to any one of claims 1 to 6 and an electrolytic solution containing an electrolyte and a solvent, wherein the weight proportion of a polymer compound contained in the negative electrode for lithium ion batteries based on the weight of the negative electrode for lithium ion batteries is 1 to 10 wt%.

9. The negative electrode for lithium ion batteries according to claim 7, having a negative electrode active material layer containing the coated negative electrode active material particles according to any one of claims 1 to 6 and an electrolytic solution containing an electrolyte and a solvent, wherein the negative electrode active material layer is formed of a non-bound component of the coated negative electrode active material particles.

10. A lithium ion battery comprising the negative electrode for lithium ion batteries according to any one of claims 7 to 9.

11. A method for producing coated negative electrode active material particles for lithium ion batteries, comprising:

a mixing process in which a solution in which a polymer compound and a compound (A) are dissolved in an organic solvent and negative electrode active material particles are mixed; and
a distillation process in which the organic solvent is distilled off after the mixing process,
wherein the polymer compound is a polymer including (meth)acrylic acid as a constituent monomer, and the weight proportion of (meth)acrylic acid in the polymer based on the weight of the polymer is 70 to 95 wt%, and
wherein the compound (A) is at least one selected from the group consisting of tetrahydrothiophene 1,1-dioxide, ethylene carbonate and vinylene carbonate.

12. The method for producing coated negative electrode active material particles for lithium ion batteries according to claim 11,
wherein, in the mixing process, a conductive assistant and ceramic particles are additionally mixed in.

Fig. 1

## INTERNATIONAL SEARCH REPORT

| International application No. |
|---|
| **PCT/JP2021/030234** |

**A. CLASSIFICATION OF SUBJECT MATTER**

*H01M 4/36*(2006.01)i; *H01M 4/13*(2010.01)i; *H01M 4/587*(2010.01)i
FI: H01M4/36 C; H01M4/13; H01M4/587

According to International Patent Classification (IPC) or to both national classification and IPC

**B. FIELDS SEARCHED**

Minimum documentation searched (classification system followed by classification symbols)

H01M4/36; H01M4/13; H01M4/587

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-156328 A (SHIN-ETSU CHEMICAL CO., LTD.) 27 August 2015 (2015-08-27) | 1-12 |
| A | WO 2017/026268 A1 (SONY CORP.) 16 February 2017 (2017-02-16) | 1-12 |
| A | JP 2002-134171 A (MITSUBISHI CHEMICAL CORP.) 10 May 2002 (2002-05-10) | 1-12 |
| A | JP 2017-152122 A (TDK CORP.) 31 August 2017 (2017-08-31) | 1-12 |
| A | JP 2017-188451 A (SANYO CHEMICAL INDUSTRIES, LTD.) 12 October 2017 (2017-10-12) | 1-12 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 October 2021** | **26 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/030234**

| Patent document cited in search report | | | Publication date (day/month/year) | Patent family member(s) | | | Publication date (day/month/year) |
|---|---|---|---|---|---|---|---|
| JP | 2015-156328 | A | 27 August 2015 | US | 2017/0040599 | A1 | |
| | | | | US | 2019/0334167 | A1 | |
| | | | | WO | 2015/107581 | A1 | |
| | | | | EP | 3096379 | A1 | |
| | | | | CN | 105917499 | A | |
| | | | | KR | 10-2016-0110380 | A | |
| WO | 2017/026268 | A1 | 16 February 2017 | US | 2018/0226637 | A1 | |
| | | | | CN | 107925059 | A | |
| | | | | KR | 10-2018-0034333 | A | |
| JP | 2002-134171 | A | 10 May 2002 | (Family: none) | | | |
| JP | 2017-152122 | A | 31 August 2017 | (Family: none) | | | |
| JP | 2017-188451 | A | 12 October 2017 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016189325 A
- JP 2017054703 A
- WO 2015005117 A
- JP 2019096478 A
- JP 2012150905 A
- WO 2015005116 A
- JP 2017160294 A